(19) Europäisches Patentamt
European Patent Office
Office européen des brevets

(11) **EP 4 580 160 A1**

(12) **EUROPEAN PATENT APPLICATION**
published in accordance with Art. 153(4) EPC

(43) Date of publication:
**02.07.2025 Bulletin 2025/27**

(21) Application number: **23869852.6**

(22) Date of filing: **30.06.2023**

(51) International Patent Classification (IPC):
**H04L 49/25** (2022.01)

(52) Cooperative Patent Classification (CPC):
**H04L 49/25**

(86) International application number:
**PCT/CN2023/104797**

(87) International publication number:
**WO 2024/066604 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211199807**

(71) Applicant: **Huawei Technologies Co., Ltd.
Shenzhen, Guangdong 518129 (CN)**

(72) Inventors:
• **PENG, Yuanyuan**
  **Shenzhen, Guangdong 518129 (CN)**
• **ZHAO, Shizhen**
  **Shanghai 200240 (CN)**
• **WANG, Jingyan**
  **Shenzhen, Guangdong 518129 (CN)**
• **LIU, Yunzhuo**
  **Shanghai 200240 (CN)**
• **HAN, Xinchi**
  **Shanghai 200240 (CN)**

(74) Representative: **Gill Jennings & Every LLP
The Broadgate Tower
20 Primrose Street
London EC2A 2ES (GB)**

(54) **NODE CONTROL METHOD AND APPARATUS, AND PROCESSING SYSTEM**

(57) A node control method and apparatus, and a processing system are provided, and belong to the field of optoelectronic technologies. The method includes: A control node in the processing system deploys a target path group when R target processing nodes include at least one first node group, and controls the R target processing nodes to process R tasks in one-to-one correspondence. The first node group includes two target processing nodes that need to communicate with each other when executing corresponding tasks and that are connected to different first electrical switching nodes. The target path group includes a communication path between target processing nodes in the first node group, and the communication path passes through the first electrical switching node, an optical switching node, and a second electrical switching node. In the processing system, there is a physical link between at least one optical switching node and at least two first electrical switching nodes and between the at least one optical switching node and at least one second electrical switching node, and there is a physical link between the first electrical switching node and at least one processing node. This application can resolve a problem that flexibility of a switching network is poor. This application is applied to the processing system.

FIG. 8

## Description

This application claims priority to Chinese Patent Application No. 202211199807.3, filed on September 29, 2022 and entitled "NODE CONTROL METHOD AND APPARATUS, AND PROCESSING SYSTEM", which is incorporated herein by reference in its entirety.

## TECHNICAL FIELD

This application relates to the field of optoelectronic technologies, and in particular, to a node control method and apparatus, and a processing system.

## BACKGROUND

A processing system is a distributed system, and the processing system includes a plurality of processing nodes that can process a task, for example, a graphics processing unit (graphics processing unit, GPU), a neural-network processor (neural-network processing unit, NPU), and a central processing unit (central processing unit, CPU). In addition to including the plurality of processing nodes, the processing system further includes a switching network. In a task processing process, the plurality of processing nodes may exchange data through the switching network.

Currently, the switching network includes a plurality of first electrical switching nodes and at least one second electrical switching node. There is a physical link between the first electrical switching node and the second electrical switching node, and there is a physical link between the first electrical switching node and at least one processing node. Different processing nodes connected to different first electrical switching nodes may exchange data by using a communication path that passes through the first electrical switching node and the second electrical switching node.

However, because the physical link between the first electrical switching node and the second electrical switching node is fixed, a communication path between the processing nodes in the switching network is fixed, and flexibility of the switching network is poor. Consequently, communication paths that are between the processing nodes and that can be provided by the switching network are limited, and a probability of failing to exchange data between the processing nodes through the switching network is high.

## SUMMARY

This application provides a node control method and apparatus, and a processing system, to resolve a problem of poor flexibility of a switching network. The technical solutions are as follows.

According to a first aspect, a node control method is provided. The method includes: A control node first determines R target processing nodes configured to process R to-be-processed tasks in one-to-one correspondence, where R ≥ 2, and the target processing nodes may be idle processing nodes or may be non-idle processing nodes. In this application, an example in which the target processing nodes are idle processing nodes is used. Then, the control node deploys a target path group when the R target processing nodes include at least one first node group. Finally, the control node controls the R target processing nodes to process the R tasks in one-to-one correspondence. The first node group includes two target processing nodes that need to communicate with each other when executing corresponding tasks and that are connected to different first electrical switching nodes. The target path group includes a communication path between target processing nodes in the first node group, and the communication path passes through the first electrical switching node, the optical switching node, and the second electrical switching node.

The control node, the processing node, the first electrical switching node, the second electrical switching node, and the optical switching node all belong to the processing system. The processing system further includes at least two processing nodes, at least two first electrical switching nodes, at least one optical switching node, and at least one second electrical switching node, where there is a physical link between the at least one optical switching node and the at least two first electrical switching nodes and between the at least one optical switching node and the at least one second electrical switching node, there is a physical link between the first electrical switching node and at least one processing node, and different first electrical switching nodes are connected to different processing nodes.

Compared with a processing system provided in a related technology, the processing system provided in embodiments of this application additionally includes the optical switching node and the control node. It can be learned that the processing system provided in this application can be compatible with the processing system in the related technology. In addition, there is a physical link between the optical switching node and both the first electrical switching node and the second electrical switching node, and a mapping relationship between ports of the optical switching node can be flexibly adjusted by the control node, so that a connection relationship between the first electrical switching node and the second electrical switching node can be flexibly adjusted by the control node. In this way, flexibility of a switching network is improved, so that a probability of failing to exchange data between processing nodes through the switching network is reduced, and impact on processing the tasks by the processing nodes is reduced.

In the processing system, there is the physical link between the at least one optical switching node and the at least two first electrical switching nodes and between the at least one optical switching node and the at least one second electrical switching node. In this application, an example in which there is a physical link between each optical switching node and each first electrical switching node and between each optical switching node and each second electrical switching node is used. In this case, a connection relationship between switching nodes in the processing node may be referred to as a mesh (mesh) connection relationship. It may be understood that there may alternatively be a physical link between the optical switching node and some first electrical switching nodes and between the optical switching node and some second electrical switching nodes. The physical link between the optical switching node and the first electrical switching node and between the optical switching node and the second electrical switching node is not limited in this embodiment of this application.

When there is the physical link between each optical switching node and each first electrical switching node and between each optical switching node and each second electrical switching node, there are various implementations of the physical links.

For example, the at least two first electrical switching nodes include Q first electrical switching nodes, the at least one optical switching node includes P optical switching nodes, and the at least one second electrical switching node includes P second electrical switching nodes, where Q may be greater than or equal to P. The first electrical switching node has P downlink ports and P uplink ports, the optical switching node has Q downlink ports and Q uplink ports, and the second electrical switching node has Q downlink ports. There is a physical link between different uplink ports of the first electrical switching node and different optical switching nodes, different downlink ports of the first electrical switching node are connected to different processing nodes, the Q uplink ports of the optical switching node are divided into P groups of uplink ports, and there is a physical link between different groups of uplink ports in the P groups of uplink ports and different second electrical switching nodes. For example, there is a physical link between a $y^{th}$ uplink port of an $x^{th}$ first electrical switching node and an $x^{th}$ downlink port of a $y^{th}$ optical switching node, where $1 \leq x \leq Q$, and $1 \leq y \leq P$; and/or the Q downlink ports of the second electrical switching node are divided into P groups of downlink ports, and there is a physical link between a $w^{th}$ group of uplink ports of a $z^{th}$ optical switching node and a $z^{th}$ group of downlink ports of a $w^{th}$ second electrical switching node, where $1 \leq z \leq P$, and $1 \leq w \leq P$.

Because $Q \geq P$, and there is the physical link between each optical switching node and each first electrical switching node and between each optical switching node and each second electrical switching node, any two processing nodes can be connected by using the first electrical switching node, the optical switching node, and the second electrical switching node, and it may be referred to as that any two processing nodes may be rearranged without blocking. It may be understood that not every two processing nodes need to be connected by using the first electrical switching node, the optical switching node, and the second electrical switching node. For example, when a plurality of processing nodes connected to a same first electrical switching node may belong to one device, these processing nodes may be interconnected by using a communication bus in the device. For another example, if a plurality of processing nodes connected to a same first electrical switching node do not belong to one device, these processing nodes may be connected by using the first electrical switching node.

When there is the physical link between each optical switching node and each first electrical switching node and between each optical switching node and each second electrical switching node, an implementation of these physical links may alternatively be different from the foregoing implementation. For example, there is no physical link between an $i^{th}$ uplink port of a $j^{th}$ first electrical switching node and a $j^{th}$ downlink port of an $i^{th}$ optical switching node, or there is no physical link between an $n^{th}$ group of uplink ports of an $m^{th}$ optical switching node and an $m^{th}$ group of downlink ports of an $n^{th}$ second electrical switching node. For another example, some first electrical switching nodes are not connected to some optical switching nodes, or some second electrical switching nodes are not connected to some optical switching nodes.

Optionally, when determining the R target processing nodes that are idle and that are configured to process the R tasks in one-to-one correspondence, the control node may use the following policy: When at least one first electrical switching node that satisfies a target condition exists, determining the R target processing nodes in processing nodes connected to one first electrical switching node in the at least one first electrical switching node, where the target condition includes: The first electrical switching node is connected to at least R idle processing nodes; or when none of the at least two first electrical switching nodes satisfies the target condition, determining the R target processing nodes in processing nodes connected to a plurality of first electrical switching nodes.

It can be learned that the control node may preferentially select the R target processing nodes connected to the same first electrical switching node, and secondarily select the R target processing nodes connected to the plurality of first electrical switching nodes. When the R target processing nodes are connected to the same first electrical switching node, a physical distance between the R target processing nodes is short. In this way, data exchange efficiency of the R target processing nodes can be improved, thereby reducing network load and avoiding congestion. In addition, when the R target processing nodes are connected to the same first electrical switching node, when the R target processing nodes process tasks, idle processing nodes in the data processing system are distributed in a centralized manner, to reduce a fragmentation degree of resources in the processing system, to help the control node subsequently select target processing nodes again.

When the at least one first electrical switching node includes one first electrical switching node, the control node may directly determine the R target processing nodes in processing nodes connected to the first electrical switching node. When the at least one first electrical switching node includes more than one first electrical switching node, the control node may determine the R target processing nodes in processing nodes connected to a first electrical switching node connected to a smallest quantity of idle processing nodes in the at least one first processing node. In other words, the one first electrical switching node connected to the R target processing nodes determined by the control node is the first electrical switching node connected to the smallest quantity of idle processing nodes in the at least one first processing node. In this way, when the R target processing nodes subsequently process tasks, idle processing nodes in the data processing system are distributed in a centralized manner, to reduce a fragmentation degree of resources in the processing system, to help the control node select target processing nodes when subsequently performing the node control method again. Optionally, the one first electrical switching node may be any electrical switching node in the at least one first processing node. This is not limited in this embodiment of this application.

When a quantity of idle processing nodes connected to each first electrical switching node is less than R, the control node may combine the R target processing nodes in processing nodes connected to more than one first electrical switching node. For example, when determining the R target processing nodes in the processing nodes connected to the plurality of first electrical switching nodes, the control node may determine q second node groups in the processing nodes connected to the plurality of first electrical switching nodes, to obtain the R target processing nodes. $q \geq 2$, and the second node group includes p target processing nodes connected to a same first electrical switching node, where $p \geq 1$. The R target processing nodes include the q second node groups. A quantity of second node groups connected to the first electrical switching node may be greater than 1 or may be equal to 1, and quantities of second node groups connected to different first electrical switching nodes may be the same or may be different. This is not limited in this embodiment of this application.

When determining the q second node groups in the processing nodes connected to the plurality of first electrical switching nodes, the control node may sequentially determine the second node group in processing nodes connected to the first electrical switching nodes in the processing system, until the q second node groups are determined. An initial value of p is a largest value in quantities of processing nodes connected to the first electrical switching nodes, or an initial value of p is a smaller value in the largest value and R. When the control node cannot determine the q second node groups in the processing nodes connected to the plurality of first electrical switching nodes, the control node may decrease p, and repeatedly perform the operation of sequentially determining the second node group in the processing nodes connected to the first electrical switching nodes in the processing system, until the q second node groups are determined or p is decreased to 0.

It can be learned that the control node may attempt to search the processing system for the q second node groups based on the initial value of p. If determining that the q second node groups do not exist in the processing system, the control node may decrease p, and repeatedly attempt to search the processing system for the q second node groups based on the decreased p. When the control node finds the q second node groups, or p is decreased to 0, the control node may stop performing the operation of repeatedly searching for the q second node groups. If the control node still cannot determine the q second node groups when p is 1, it indicates that a quantity of all idle processing nodes in the processing system is less than R, and the processing system does not include R idle processing nodes. After reducing p to 0, the control node may stop attempting to search for the q second node groups. If the control node does not determine the q second node groups after stopping attempting to search for the q second node groups, the control node may attempt to search for the q second node groups again after waiting for specific duration (in this case, the quantity of idle processing nodes may increase).

Optionally, the control node may sequentially determine, in ascending order (or random order or the like) of quantities of idle processing nodes connected to the first electrical switching nodes, the second node group in the processing nodes connected to the first electrical switching nodes in the processing system. In this way, the selected target processing nodes may be distributed in a centralized manner, and when the R target processing nodes process tasks, idle processing nodes in the data processing system are distributed in a centralized manner, to reduce a fragmentation degree of resources in the processing system, to help the control node select target processing nodes when subsequently performing the node control method again.

Optionally, before the control node decreases p, p may be 2 to a $k^{th}$ power. When the control node decreases p, p may be decreased to 2 to a $(k - 1)^{th}$ power. Certainly, p may not be 2 to the $k^{th}$ power, and the control node may alternatively decrease p in another manner, for example, decrease p to p - 1.

In this embodiment of this application, an example in which the control node determines, in the manner of determining the q second node groups, the R target processing nodes in the processing nodes connected to the plurality of first electrical switching nodes is used. The control node may alternatively determine, in another manner, the R target processing nodes in the processing nodes connected to the plurality of first electrical switching nodes. For example, the control node may randomly determine the R target processing nodes in the processing nodes connected to the plurality of first electrical switching nodes, or the control node may determine, according to an instruction of a user, the R target processing nodes in the processing nodes connected to the plurality of first electrical switching nodes. Quantities of target processing nodes connected to different first electrical switching nodes may be the same or may be different, and a quantity of target processing nodes connected to the first electrical switching nodes may be an integer multiple of p, or may not be an integer multiple of p. This is not limited in this embodiment of this application.

The target path group includes the communication path between the target processing nodes in the first node group. Optionally, in this embodiment of this application, an example in which the target path group includes a communication path between every two target processing nodes in the R target processing nodes is used.

Optionally, when the R target processing nodes are divided into q second node groups, and each second node group includes p target processing nodes connected to a same first electrical switching node, ports connected to the optical switching node in all second electrical switching nodes in the processing system include p port groups. Each port group includes q idle ports that belong to a same second electrical switching node. The p port groups belong to one or more second electrical switching nodes, and the q second node groups are connected to one or more processing nodes. In this case, the target path group is used to connect the q idle ports in each port group to the q second node groups (where the q idle ports are connected to the q second node groups in one-to-one correspondence), and connect the p target processing nodes in each second node group to the p port groups (where the p target processing nodes are connected to the p port groups in one-to-one correspondence). For example, the target path group is used to connect an $f^{th}$ idle port in a $d^{th}$ port group to a $d^{th}$ target processing node in an $f^{th}$ second node group, where $1 \leq d \leq p$, and $1 \leq f \leq q$.

It may be understood that, when the R target processing nodes are divided into q second node groups, and each second node group includes the p target processing nodes connected to the same first electrical switching node, ports connected to the optical switching node in all second electrical switching nodes in the processing system may not include p port groups, and a quantity of idle ports in the port groups may not be q.

Optionally, when the target path group includes a plurality of communication paths (where the communication path is used to connect two processing nodes in the R processing nodes), the communication paths in the target path group may be independent of each other, and the communication paths in the target path group do not overlap. In this way, there is no bandwidth sharing problem between data transmitted on different communication paths in the target path group, and data transmitted on each communication path can exclusively occupy a bandwidth. This ensures transmission efficiency of the data transmitted on each communication path, and avoids path congestion caused by overlapping of these communication paths. Certainly, the communication paths in the target path group may not be independent of each other. This is not limited in this embodiment of this application.

Optionally, before the control node deploys the target path group, if another path (a path that passes through the first electrical switching node, the optical switching node, and the second electrical switching node) for communication between non-idle processing nodes is deployed in the processing system, the communication path in the target path group is independent of the another path. In other words, the communication path that is in the target path group and that is deployed by the control node does not overlap a non-idle communication path that is already deployed in the processing system. In this way, data transmitted on the communication path in the target path group and the another deployed path can be independent of each other. This avoids path congestion caused by path overlapping, ensures data transmission efficiency, and does not affect the non-idle processing nodes.

The control node needs to determine the target path group before deploying the target path group. For example, when determining the target path group, the control node may first determine a plurality of candidate path groups of the target path group, and then select one candidate path group from the plurality of candidate path groups as the target path group. A function of the candidate path group is the same as that of the target path group. For the candidate path group, refer to the descriptions of the target path group. Details are not described in this embodiment of this application.

Optionally, the control node may randomly select one candidate path group from the plurality of candidate path groups as the target path group.

Optionally, the control node may select a candidate path group corresponding to a smallest target parameter in the plurality of candidate path groups as the target path group. A target parameter corresponding to the candidate path group is negatively correlated to a concentration degree of idle ports connected to the optical switching node in all the second electrical switching nodes after the candidate path group is deployed.

A smaller target parameter corresponding to the candidate path group indicates a higher concentration degree of the idle ports connected to the optical switching node in all the second electrical switching nodes after the candidate path group is deployed, and a lower fragmentation degree of resources in the processing system, to help the control node subsequently deploy a path. In this embodiment of this application, the control node selects the candidate path group corresponding to the smallest target parameter as the target path group. In this way, after the target path group is deployed on the control node, the concentration degree of the idle ports connected to the optical switching node in all the second electrical switching nodes is the highest, and the fragmentation degree of the resources in the processing system is the lowest. It may be understood that the control node may select any candidate path group corresponding to a non-largest target parameter (for example, a candidate path group corresponding to a second smallest target parameter) in the plurality of candidate path groups as the target path group. This is not limited in this embodiment of this application.

The target parameter may be implemented in a plurality of implementations. One implementation is applicable to the following case: The R target processing nodes include q second node groups, each second node group includes p target processing nodes connected to a same first electrical switching node, ports connected to the optical switching node in all the second electrical switching nodes in the processing system include p port groups, and each port group includes q idle ports that belong to a same second electrical switching node; and the q second node groups are connected to at least one first electrical switching node, and the p port groups belong to one or more second electrical switching nodes. In this implementation, the candidate path group is used to connect the q idle ports in each port group to the q second node groups, and connect the p target processing nodes in each second node group to the p port groups. The target parameter corresponding to the candidate path group is

$$\sum_{j=1}^{P} s_j * SP_j$$

, where P is a quantity of second electrical switching nodes in the processing system, $S_j$ represents a quantity of port groups in a $j^{th}$ second electrical switching node, and $SP_j$ represents a quantity of idle ports connected to the optical switching node in the $j^{th}$ second electrical switch before the candidate path group is deployed. The target parameter is not limited to this implementation. For example, the target parameter may alternatively be equal to

$$1 + \sum_{j=1}^{P} s_j * SP_j$$

or the like.

In this embodiment of this application, an example in which the control node can determine the target path group after determining the R target processing nodes is used. Optionally, if the control node cannot determine the target path group, the control node may update the determined R target processing nodes, and repeatedly perform the operation of determining the target path group until the target path group is determined or the R target processing nodes cannot be updated. When updating the R target processing nodes, the control node may re-determine the R target processing nodes in the manner of determining the R target processing nodes in the foregoing process, and it needs to be ensured that the re-determined R target processing nodes are not completely the same as original R target processing nodes.

According to a second aspect, a node control apparatus is provided. The node control apparatus belongs to a control node in a processing system, and the node control apparatus includes modules configured to perform the node control method according to any design in the first aspect.

According to a third aspect, a node control apparatus is provided, including a processor and a memory. The memory stores a program, and the processor is configured to execute the program stored in the memory, to implement the node control method according to any design in the first aspect.

According to a fourth aspect, a processing system is provided, including: a control node, at least two processing nodes, at least two first electrical switching nodes, at least one optical switching node, and at least one second electrical switching node. There is a physical link between the at least one optical switching node and the at least two first electrical switching nodes and between the at least one optical switching node and the at least one second electrical switching node, there is a physical link between the first electrical switching node and the at least one processing node, and different first electrical switching nodes are connected to different processing nodes; and the control node is configured to perform the method according to any design in the first aspect.

According to a fifth aspect, a computer-readable storage medium is provided. The computer-readable storage medium stores instructions. When the instructions are executed on a computer, the computer is enabled to perform the method according to any design in the first aspect.

According to a sixth aspect, a computer program product is provided. When the computer program product runs on a computer, the computer is enabled to perform the method according to any design in the first aspect.

For effects of the second aspect to the sixth aspect, refer to the effects of corresponding designs in the first aspect. Details are not described herein in this application.

**BRIEF DESCRIPTION OF DRAWINGS**

FIG. 1 is a diagram of a structure of a processing system according to an embodiment of this application;

FIG. 2 is a diagram of a Clos architecture according to an embodiment of this application;

FIG. 3 is a diagram of a spine-leaf architecture according to an embodiment of this application;

FIG. 4 is a diagram of an ECMP manner according to an embodiment of this application;

FIG. 5 is a diagram of a change of a transmission rate of data transmitted on a communication path 1 according to an embodiment of this application;

FIG. 6 is a diagram of a change of a transmission rate of data transmitted on a communication path 2 according to an embodiment of this application;

FIG. 7 is a diagram of a connection relationship between switching nodes according to an embodiment of this application;

FIG. 8 is a diagram of a structure of another processing system according to an embodiment of this application;

FIG. 9 is a diagram of a structure of another processing system according to an embodiment of this application;

FIG. 10 is a diagram of a structure of another processing system according to an embodiment of this application;

FIG. 11 is a diagram of a structure of another processing system according to an embodiment of this application;

FIG. 12 is a diagram of another connection relationship between switching nodes according to an embodiment of this application;

FIG. 13 is a flowchart of a node control method according to an embodiment of this application;

FIG. 14 is a diagram of a second node group according to an embodiment of this application;

FIG. 15 is a diagram of another second node group according to an embodiment of this application;

FIG. 16 is a diagram of another second node group according to an embodiment of this application;

FIG. 17 is a diagram of another second node group according to an embodiment of this application;

FIG. 18 is a diagram of another second node group according to an embodiment of this application;

FIG. 19 is a diagram of comparison between a processing system in this application and a processing system in a related technology according to an embodiment of this application;

FIG. 20 is a block diagram of a node control apparatus according to an embodiment of this application; and

FIG. 21 is a diagram of a structure of a node control apparatus according to an embodiment of this application.

## DESCRIPTION OF EMBODIMENTS

To make principles and technical solutions of this application clearer, the following further describes implementations of this application in detail with reference to the accompanying drawings.

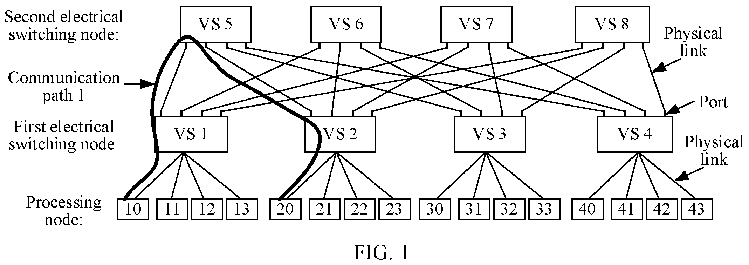

A processing system is any system configured to process a task, for example, a public cloud platform system. The processing system is a distributed system. As shown in FIG. 1, a processing system includes plurality of processing nodes that can process a task. In FIG.

1, 16 processing nodes (which are respectively processing nodes 10 to 13, 20 to 23, 30 to 33, and 40 to 43) are used as an example. The processing node may be any node that has a processing function, for example, a GPU, a CPU, or an NPU.

In addition to including the plurality of processing nodes, the processing system further includes a switching network. In a task processing process, the plurality of processing nodes may exchange data through the switching network. Still refer to FIG. 1. The switching network includes a plurality of first electrical switching nodes and at least one second electrical switching node. In FIG. 1, four first electrical switching nodes (VS 1 to VS 4) and four second electrical switching nodes (VS 5 to VS 8) are used as an example. The electrical switching node may be any node that exchanges data in an electrical switching manner, for example, an electrical switch.

There is a physical link between the first electrical switching node and the second electrical switching node. In FIG. 1, an example in which there is a physical link between each first electrical switching node and each second electrical switching node is used. For example, each first electrical switching node has an uplink port corresponding to each second electrical switching node, and each second electrical switching node has a downlink port corresponding to each first electrical switching node. An uplink port corresponding to the second electrical switching node in the first electrical switching node is connected to a downlink port corresponding to the first electrical switching node in the second electrical switching node. It can be learned from FIG. 1 that, each first electrical switching node has four uplink ports, and the four uplink ports are connected to four second electrical switching nodes in one-to-one correspondence; and each second electrical switching node has four downlink ports, and the four downlink ports are connected to four first electrical switching nodes in one-to-one correspondence. Each first electrical switching node is connected to at least one processing node. In FIG. 1, an example in which each first electrical switching node is connected to four processing nodes is used.

An architecture of the processing system shown in FIG. 1 is a spine-leaf (spine-leaf) architecture, and the spine-leaf architecture is a Clos architecture (an architecture proposed by a person named Charles Clos in Bell Laboratories).

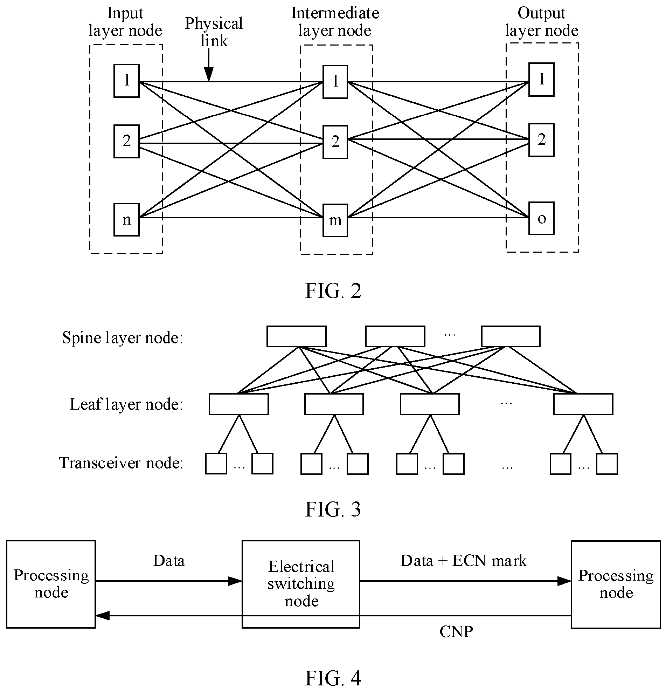

The Clos architecture is a multi-level circuit switching network architecture. The Clos architecture can use a plurality of small-scale and low-cost electrical switching nodes to construct a complex and large-scale switching network. As shown in FIG. 2, a Clos architecture usually includes n input layer nodes, m intermediate layer nodes, and o output layer nodes, where there is a physical link between each input layer node and each intermediate layer node, and there is a physical link between each intermediate layer node and each output layer node. In addition, each input layer node is connected to a sending nodes (not shown in FIG. 2), and each output node is connected to b receiving nodes (not shown in FIG. 2). When m is greater than or equal to a larger value of a and b, any sending node and any receiving node can be connected through an input layer node, an intermediate layer node, and an output layer node (which may be referred to as that any sending node and any receiving node can be rearranged without blocking).

A spine-leaf architecture is a Clos architecture. When a sending node in the Clos architecture is also used as a receiving node, an input layer node in the Clos architecture is also used as an output layer node. In this way, the spine-leaf architecture can be obtained. As shown in FIG. 3, a spine-leaf architecture includes a leaf (leaf) layer node and a spine (spine) layer node. There is a physical link between each leaf layer node and each spine layer node. Each leaf layer node is connected to a plurality of transceiver nodes. In FIG. 1, the first electrical switching node is a leaf layer node, the second electrical switching node is a spine layer node, and the processing node is a transceiver node. When a quantity of spine layer nodes is greater than or equal to a quantity of transceiver nodes connected to the leaf layer node, any two transceiver nodes can be connected through the spine layer node and the leaf layer node (which may be referred as that any two transceiver nodes can be rearranged without blocking).

Further, in the processing system, different processing nodes connected to different first electrical switching nodes may exchange data through a communication path that passes through the first electrical switching node and the second electrical switching node. As shown in FIG. 1, the processing node 10 and the processing node 20 may exchange data through a communication path that passes through the first electrical switching node VS 1, the second electrical switching node VS 5, and the first electrical switching node VS 2.

However, because the physical link between the first electrical switching node and the second electrical switching node is fixed, a communication path between the processing nodes in the switching network is fixed, and flexibility of the switching network is poor. Consequently, communication paths that are between the processing nodes and that can be provided by the switching network are limited, and a probability of failing to exchange data between the processing nodes through the switching network is high.

In addition, in a related technology, the switching network may perform data exchange between the processing nodes in two manners. The following separately describes the two manners.

Manner (1): Equal-cost multi-path routing (equal-cost multi-path routing, ECMP)

In this manner, after receiving data that is sent by one processing node and that needs to be exchanged with another processing node, the first electrical switching node searches for a communication path between the two processing nodes in an ECMP manner, and then transmits the data on the communication path. However, there are usually a large quantity of processing nodes that need to exchange data in the processing system, and there is a high probability that communication paths selected by the first electrical switching nodes overlap. Consequently, bandwidth contention exists between data on the communication paths, and congestion is easily caused on the communication paths.

To avoid congestion on the communication paths, the processing system may control data transmission by using a congestion control algorithm (for example, a data center quantized congestion notification (data center quantized congestion notification, DCQCN) algorithm). For example, as shown in FIG. 4, in a process of being transmitted between two processing nodes, data passes through an electrical switching node (for example, a first electrical switching node and a second electrical switching node). A processing node for sending the data sends the data at a highest rate at the beginning. If a communication path is congested in the data transmission process, the electrical switching node marks the data with an explicit congestion notification (explicit congestion notification, ECN) mark. When the data is transmitted to a processing node that receives the data, the processing node sends a congestion notification packet (congestion notification packet, CNP) to the processing node that sends the data. After receiving the CNP, the processing node that sends the data decreases a data sending rate, to quickly reduce a congestion degree of the communication path. Afterwards, the processing node that sends the data may slowly increase the data sending rate.

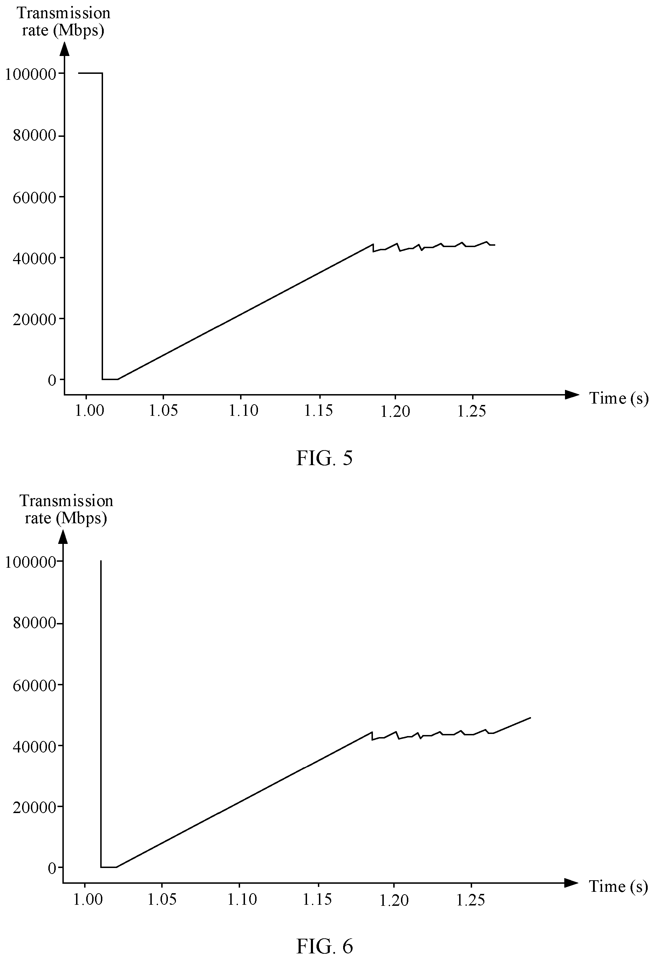

The processing system shown in FIG. 1 is used as an example. It is assumed that the processing node 10 and the processing node 20 need to exchange data by using a communication path 1 that passes through the first electrical switching node VS 1, the second electrical switching node VS 5, and the first electrical switching node VS 2. FIG. 5 is a diagram of a change of a transmission rate of data transmitted on the communication path 1. As shown in FIG. 5, when there is no congestion, the transmission rate of the data transmitted on the communication path 1 reaches 100000 megabits per second (Mbps), and a bandwidth of the data transmitted on the communication path 1 reaches 100 gigabits (GB).

Afterwards, the processing node 21 and the processing node 40 need to exchange data by using a communication path 2 (not shown in FIG. 1) that passes through the first electrical switching node VS 2, the second electrical switching node VS 5, and the first electrical switching node VS 4. It can be learned that, the communication path 1 and the communication path 2 contend for bandwidth on a physical link between the second electrical switching node VS 5 and the first electrical switching node VS 2. Consequently, the physical link is congested, and both the communication path 1 and the communication path 2 are congested. After congestion occurs, data between the processing node 10 and the processing node 20 is marked with an ECN mark, and data between the processing node 21 and the processing node 40 is also marked with an ECN mark. With reference to FIG. 5 and FIG. 6 (FIG. 6 is a diagram of a change of a transmission rate of data transmitted on the communication path 2), it can be learned that after the two parts of data are marked with the ECN marks, transmission rates of the two parts of data rapidly decrease from 100000 Mbps to 0 Mbps. Afterwards, the transmission rates of the two parts of data slowly increase to approximately 45000 Mbps. After transmission of the data that is between the processing node 10 and the processing node 20 and that is transmitted on the transmission path 1 is completed, the transmission rate of the data that is between the processing node 21 and the processing node 40 and that is transmitted on the transmission path 2 starts to gradually increase from 45000 Mbps to 100000 Mbps.

It can be learned that when congestion occurs, both the transmission rates of the data transmitted on the communication path 1 and the data transmitted on the communication path 2 are low in a long time period, and bandwidth on the physical link is wasted. Even if the transmission rate reaches a stable state (where the transmission rate is approximately 45000 Mbps), a sum of the transmission rates of the data on the communication path 1 and the data on the communication path 2 is lower than a total bandwidth (100 GB). Both transmission duration of the data on the communication path 1 and transmission duration of the data on the communication path 2 are greatly increased compared with those in a non-congestion case.

Manner (2): Static route

In this manner, personnel configure a static route on each electrical switching node. After receiving data that needs to be sent by one processing node to another processing node, the first electrical switching node and the second electrical switching node forward the data based on a preconfigured static route, so that the data is transmitted to the another processing node.

However, when the processing system is used as a public cloud, because there are both a large quantity of processing nodes and a large quantity of electrical switching nodes in the processing system, to configure the static route on each electrical switching node is difficult for the personnel, and operation and maintenance difficulty of the static route is high. In addition, the static route fragments resources (nodes and physical links between the nodes) of the processing system, resulting in low utilization of the processing system.

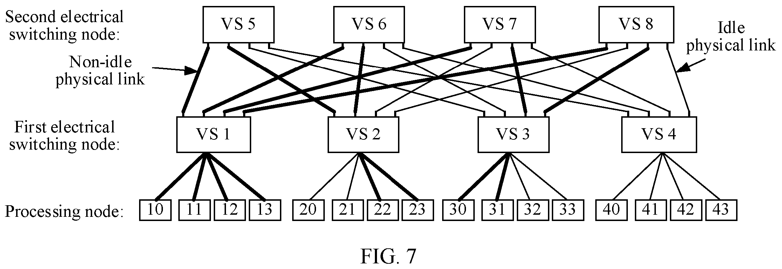

For example, the processing system shown in FIG. 1 is still used as an example. As shown in FIG. 7, it is assumed that a processing node 10 and a processing node 22 exchange data by using a communication path 1 in a switching network, and the communication path 1 passes through a first-point interaction node VS 1, a second electrical switching node VS 5, and a first electrical switching node VS 2; a processing node 11 and a processing node 23 exchange data by using a communication path 2 in the switching network, where the communication path 1 passes through the first-point interaction node VS 1, a second electrical switching node VS 6, and the first electrical switching node VS 2; a processing node 12 and a processing node 30 exchange data by using a communication path 3 in the switching network, where the communication path 1 passes through the first-point interaction node VS 1, a second electrical switching node VS 7, and a first electrical switching node VS 3; and a processing node 13 and a processing node 21 exchange data by using a communication path 4 in the switching network, and the communication path 1 passes through the first-point interaction node VS 1, a second electrical switching node VS 8, and the first electrical switching node VS 3. Physical links that the communication path 1, the communication path 2, the communication path 3, and the communication path 4 pass through are all non-idle physical links. A physical link is idle when the physical link does not forward data. A physical link is not idle when the physical link forwards data.

In this case, although some idle physical links exist in the switching network, these idle physical links are scattered, resulting in a high fragmentation degree of resources in the switching network. In this case, if there are other processing nodes that need to exchange data, there is a high probability that the switching network cannot provide a communication path between these processing nodes. For example, if a processing node 20 and a processing node 32 need to exchange data, and the processing node 21 and a processing node 33 need to exchange data, currently idle physical links cannot support communication between the four nodes.

To implement data exchange between the four processing nodes, there may be the following three solutions.

Solution 1: Occupy a non-idle physical link. For example, communication between the processing node 20 and the processing node 32 is used as an example. The processing node 20 and the processing node 32 may exchange data by using a communication path 5 that passes through the first electrical switching node VS 2, the second electrical switching node VS 6, and the first electrical switching node VS 3, and both the communication path 5 and the communication path 2 pass through a physical link between the first electrical switching node VS 2 and the second electrical switching node VS 6. Data on the two communication paths cannot exclusively occupy bandwidth on the physical link, and needs to preempt bandwidth from each other. Consequently, congestion is easily caused on the physical link, and congestion is caused on the two communication paths.

Solution 2: Wait until a non-idle physical link becomes an idle physical link. In this case, each physical link supports communication between a group of processing nodes (including two processing nodes), and does not support communication between a plurality of groups of processing nodes. The processing node 20 and the processing node 32 are used as an example. After the processing node 11 and the processing node 23 end exchanging data through the communication path 2 in the switching network, the processing node 20 and the processing node 32 exchange data through a communication path that passes through the first electrical switching node VS 2, the second electrical switching node VS 6, and the first electrical switching node VS 3. However, in a waiting process, a resource waste of the switching network is caused, and waiting further causes a problem that time for processing a task by the processing system is prolonged.

Solution 3: Re-adjust (also referred to as rearrange) physical links between the first electrical switching nodes and the second electrical switching nodes, and a static route configured in each switching node is adjusted based on the adjusted physical links, so that the switching network can support data exchange needed by the processing nodes. In this case, each physical link supports communication between a group of processing nodes (including two processing nodes), and does not support communication between a plurality of groups of processing nodes. For example, the processing node 10 and the processing node 22, the processing node 11 and the processing node 23, the processing node 12 and the processing node 30, the processing node 13 and the processing node 21, and the processing node 20 and the processing node 32 can exchange data by using five mutually independent communication paths in the switching network. However, such operation and maintenance have great difficulty, and affect processing nodes (for example, the processing node 10 and the processing node 22) that are exchanging data. In addition, if the static route in each switching node cannot be synchronously updated in this process, temporary physical link congestion may further occur.

It can be learned from the foregoing content that, not only a problem of poor flexibility of the switching network exists in the related technology, but also problems of physical link congestion, low data transmission efficiency, low resource utilization of the processing system, inability to exclusively occupy bandwidth for data transmitted between processing nodes, impact on the processing nodes that are exchanging data, and great operation and maintenance difficulty exist when the processing nodes exchange data through the switching network in the related technology. In addition, if Solution 2 or Solution 3 above is used to avoid physical link congestion as much as possible, a resource waste is also caused or processing nodes that are exchanging data are affected.

Embodiments of this application provide a processing system and a node control method performed by a control node in the processing system. Flexibility of a switching network in the processing system is high. In addition, when the control node performs the node control method, a probability of failing to exchange data between processing nodes through the switching network can be reduced. In addition, this application can further reduce physical link congestion, improve data transmission efficiency, improve resource utilization of the processing system, ensure that the data transmitted between the processing nodes exclusively occupies bandwidth, without affecting processing nodes that are exchanging data, and reduce operation and maintenance difficulty.

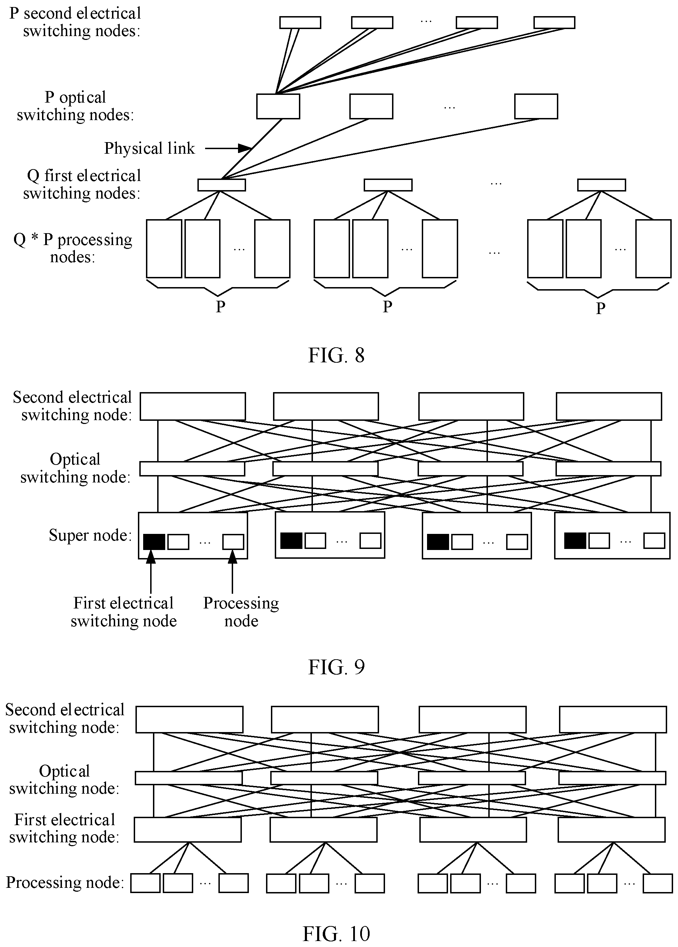

For example, FIG. 8 is a diagram of a structure of a processing system according to an embodiment of this application. As shown in FIG. 8, the processing system provided in this embodiment of this application includes a control node (not shown in FIG. 8), at least two processing nodes, at least two first electrical switching nodes, at least one optical switching node, and at least one second electrical switching node. In FIG. 8, an example in which there are a plurality of processing nodes, first electrical switching nodes, optical switching nodes, and second electrical switching nodes is used. It may be understood that there may be not a plurality of optical switching nodes or second electrical switching nodes.

The optical switching node exchanges data by using an optical switching technology, and the electrical switching node exchanges data by using an electrical switching technology. The optical switching node may be referred to as an optical cross-connect (optical cross-connect, OXC) node, an optical switch, or the like. The OXC node may be a micro-electro-mechanical-system (micro-electro-mechanical-system, MEMS) OXC node. The first electrical switch may be a top of rank (top of rank, TOR) switch or the like.

Each of nodes (for example, the control node, the processing node, the first electrical switching node, the optical switching node, and the at least one second electrical switching node) in the processing system may be a device, or may be a part of the device (for example, a switching node is an interface board).

The control node is connected to each processing node, each first electrical switching node, each optical switching node, and each second electrical switching node. The control node is configured to control other nodes than the control node in the processing system. For example, the control node is configured to control the processing node to process a task, and deploy a communication path that passes through the first electrical switching node, the optical switching node, and the second electrical switching node, where the communication path can connect to processing nodes that need to exchange data and that are connected to different first electrical switching nodes. Selecting the processing node for processing the task and deploying the communication path may be referred to as scheduling a resource. The control node may store information such as a topology structure of the processing system and a resource occupation status (used to indicate whether a processing node is idle, whether a physical link is idle, whether a port of a switching node is idle, and the like). The control node may control the processing node and the switching node based on the information.

Each first electrical switching node is connected to at least one processing node, and different first electrical switching nodes are connected to different processing nodes. Different first electrical switching nodes may be connected to a same quantity of processing nodes or may be connected to different quantities of processing nodes. In FIG. 8, an example in which different first electrical switching nodes are connected to a same quantity of processing nodes is used. In some cases, a plurality of processing nodes connected to a same first electrical switching node may belong to one device, and these processing nodes may be interconnected by using a communication bus in the device, and are further connected to the same first electrical switching node. The communication bus is, for example, a high-speed serial computer extension bus standard (peripheral component interconnect express, PCIE) bus or an NVLink bus (a computer bus). The plurality of processing nodes may be all or some processing nodes connected to the first electrical switching node. This is not limited in this embodiment of this application.

In the processing system, there is the physical link between the at least one optical switching node and the at least two first electrical switching nodes and between the at least one optical switching node and the at least one second electrical switching node. FIG. 8 uses an example in which there is a physical link between each optical switching node and each first electrical switching node and between each optical switching node and each second electrical switching node, and FIG. 8 shows only a physical link between one first electrical switching node and each optical switching node and a physical link between one optical switching node and each second electrical switching node. In this case, a connection relationship between switching nodes in the processing node may be referred to as a mesh (mesh) connection relationship. It may be understood that there may alternatively be a physical link between the optical switching node and some first electrical switching nodes and between the optical switching node and some second electrical switching nodes. The physical link between the optical switching node and the first electrical switching node and between the optical switching node and the second electrical switching node is not limited in this embodiment of this application.

When there is the physical link between each optical switching node and each first electrical switching node and between each optical switching node and each second electrical switching node, there are various implementations of the physical links.

For example, still refer to FIG. 8. The at least two first electrical switching nodes in the processing system include Q first electrical switching nodes, the at least one optical switching node in the processing system includes P optical switching nodes, and the at least one second electrical switching node in the processing system includes P second electrical switching nodes. $Q \geq P$. Each first electrical switching node has P downlink ports and P uplink ports, each optical switching node has Q downlink ports and Q uplink ports, and each second electrical switching node has Q downlink ports. These ports are not shown in FIG. 8. Both P and Q may be a power of 2.

There is a physical link between different uplink ports of each first electrical switching node and different optical switching nodes, so that each first electrical switching node is connected to each optical switching node; and different downlink ports of the first electrical switching node are connected to different processing nodes, so that the first electrical switching node is connected to P processing nodes. The Q uplink ports of the optical switching node are divided into P groups of uplink ports, and there is a physical link between the different groups of uplink ports in the P groups of uplink ports and different second electrical switching nodes, so that each optical switching node is connected to each second electrical switching node, and there are Q/P physical links between each optical switching node and each second electrical switching node (in FIG. 8, Q/P = 2 is used as an example). For example, there is a physical link between a $y^{th}$ uplink port of an $x^{th}$ first electrical switching node and an $x^{th}$ downlink port of a $y^{th}$ optical switching node, where $1 \leq x \leq Q$, and $1 \leq y \leq P$; and/or the Q downlink ports of the second electrical switching node are divided into P groups of downlink ports, and there is a physical link between a $w^{th}$ group of uplink ports of a $z^{th}$ optical switching node and a $z^{th}$ group of downlink ports of a $w^{th}$ second electrical switching node, where $1 \leq z \leq P$, and $1 \leq w \leq P$.

Because $Q \geq P$, and there is the physical link between each optical switching node and each first electrical switching node and between each optical switching node and each second electrical switching node, any two processing nodes can be connected by using the first electrical switching node, the optical switching node, and the second electrical switching node, and it may be referred to as that any two processing nodes may be rearranged without blocking. It may be understood that not every two processing nodes need to be connected by using the first electrical switching node, the optical switching node, and the second electrical switching node. For example, when a plurality of processing nodes connected to a same first electrical switching node may belong to one device, these processing nodes may be interconnected by using a communication bus in the device. For another example, if a plurality of processing nodes connected to a same first electrical switching node do not belong to one device, these processing nodes may be connected by using the first electrical switching node.

When there is the physical link between each optical switching node and each first electrical switching node and between each optical switching node and each second electrical switching node, an implementation of these physical links may alternatively be different from the implementation shown in FIG. 8. For example, in FIG. 8, there is no physical link between an $i^{th}$ uplink port of a $j^{th}$ first electrical switching node and a $j^{th}$ downlink port of an $i^{th}$ optical switching node, or there is no physical link between an $n^{th}$ group of uplink ports of an $m^{th}$ optical switching node and an $m^{th}$ group of downlink ports of an $n^{th}$ second electrical switching node. For another example, in FIG. 8, some first electrical switching nodes are not connected to some optical switching nodes, or some second electrical switching nodes are not connected to some optical switching nodes.

It may be understood that nodes in the processing system provided in this embodiment of this application may be independent of each other, or some nodes may be implemented by using one node, or some nodes or all nodes may be integrated.

For example, as shown in FIG. 9, a first electrical switching node and a processing node connected to the first electrical switching node may be integrated into one node (which may be referred to as a super node).

For another example, when a quantity of first electrical switching nodes is the same as a quantity of second electrical switching nodes, first electrical switching nodes and second electrical switching nodes in a processing system may be in one-to-one correspondence, and a first electrical switching node and a corresponding second electrical switching node may be implemented by using one node. This is not limited in this embodiment of this application.

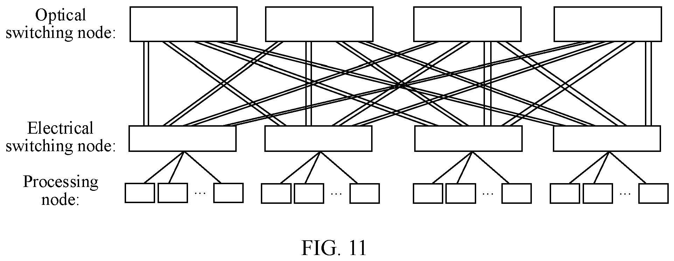

When the first electrical switching node and the corresponding second electrical switching node are implemented by using one electrical switching node, there are two groups of ports used to connect to an optical switching node in the electrical switching node. One group of ports are considered as ports connecting the first electrical switching node to the optical switching node, and the other group of ports are considered as ports connecting the second electrical switching node to the optical switching node. The two groups of ports may be sequentially arranged, or ports in the two groups of ports may be alternately arranged one by one. This is not limited in this embodiment of this application. For example, when a first electrical switching node and a corresponding second electrical switching node are not implemented by using one electrical switching node, a connection relationship between the first electrical switching node, an optical switching node, and the second electrical switching node may be shown in FIG. 10. When a first electrical switching node and a corresponding second electrical switching node are implemented by using one electrical switching node, and ports in two groups of ports used to connect to an optical switching node in the electrical switching node are alternately arranged one by one, physical links between the electrical switching node and the optical switching node are shown in FIG. 11.

Compared with a processing system provided in a related technology, the processing system provided in embodiments of this application additionally includes the optical switching node and the control node. It can be learned that the processing system provided in this application can be compatible with the processing system in the related technology. In addition, there is a physical link between the optical switching node and both the first electrical switching node and the second electrical switching node, and a mapping relationship between ports of the optical switching node can be flexibly adjusted by the control node, so that a connection relationship between the first electrical switching node and the second electrical switching node can be flexibly adjusted by the control node. In this way, flexibility of a switching network is improved, so that a probability of failing to exchange data between processing nodes through the switching network is reduced, and impact on processing the tasks by the processing nodes is reduced.

It can be learned that, after the optical switching node is introduced, a switching network in the processing system may be changed from a static network to a dynamic network based on a dynamic switching function of a mapping relationship between the ports of the optical switching node, so that the switching network is more flexible.

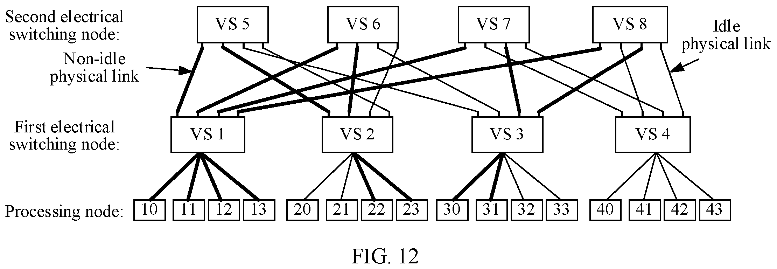

For example, in the scenario shown in FIG. 7, if the processing node 20 and the processing node 32 need to exchange data, and the processing node 21 and the processing node 33 need to exchange data, there is no idle physical link that can support data exchange between these processing nodes in FIG. 7. However, in embodiments of this application, because there is one layer of optical switching node between the first electrical switching node and the second electrical switching node, a mapping relationship between ports of the optical switching node may be adjusted, to reconfigure a connection relationship between the first electrical switching node and the second electrical switching node. As shown in FIG. 12, after a connection relationship between a first electrical switching node and a second electrical switching node is reconfigured, a $3^{rd}$ port of a first electrical switching node VS 2 is not connected to a second electrical switching node VS 7, and is connected to a $4^{th}$ port of a second electrical switching node VS 6; and a $4^{th}$ port of the first electrical switching node VS 2 is not connected to a second electrical switching node VS 8, and is connected to a $4^{th}$ port of a second electrical switching node VS 5. In this way, a processing node 20 and a processing node 32 may communicate with each other by using the first electrical switching node VS 2, the second electrical switching node VS 6, and a first electrical switching node VS 3, and a processing node 21 and a processing node 33 may communicate with each other by using the first electrical switching node VS 2, the second electrical switching node VS 5, and the first electrical switching node VS 3. In addition, another processing node that is performing communication is not affected, communication path congestion is not caused, and resource waste is reduced.

In addition, as a scale of the processing system gradually increases, a possibility that data exchanged between the processing nodes is congested during transmission is also greatly increased. When congestion occurs, network resource utilization may be low, and overall performance of the processing system is low. In embodiments of this application, the control node can further properly schedule a resource (a processing node, a switching node, or the like) in the processing system, so that communication efficiency between the processing nodes is ensured, and path congestion is avoided, thereby performing data transmission by using a resource such as a network bandwidth with maximum efficiency.

The following describes, with reference to the node control method performed by the control node and provided in embodiments of this application, a process in which the control node properly schedules a resource of the processing system.

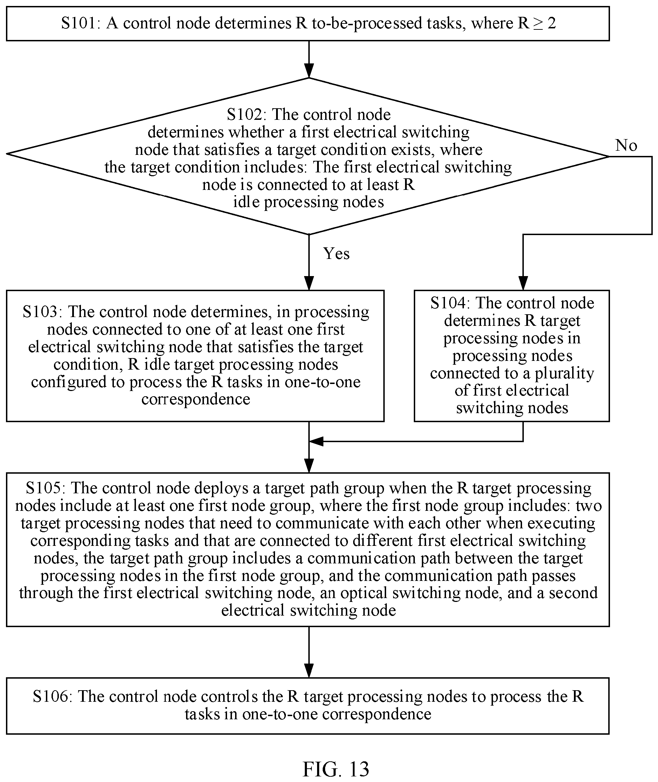

For example, FIG. 13 is a flowchart of a node control method according to an embodiment of this application. As shown in FIG. 13, the method includes the following steps.

S101: A control node determines R to-be-processed tasks, where $R \geq 2$. S102 is performed.

The R tasks are subsequently processed by the R target processing nodes in one-to-one correspondence. At least two tasks in the R tasks need to exchange data in a processing process, and the at least two tasks may be some or all tasks in the R tasks. For the tasks that need to exchange data with each other when being processed, target processing nodes corresponding to these tasks need to communicate with each other when processing the tasks. For example, the processing node 20, the processing node 21, the processing node 32, and the processing node 33 in FIG. 7 are configured to process the R tasks. Tasks to be processed by the processing node 20 and the processing node 32 need to exchange data with each other when being processed, and tasks to be processed by the processing node 21 and the processing node 33 need to exchange data with each other when being processed.

The foregoing task may be any task. For example, the foregoing task is an artificial intelligence (artificial intelligence, AI) training task, different tasks are used to train different machine learning models or a same machine learning model, and training data needed by the different tasks may be the same or may be different. For another example, the task is an image processing task.

The control node determines the R tasks in various manners. For example, the control node may receive information about the R tasks, and determine the R tasks based on the information. For another example, the control node may receive information about a to-be-processed main task, determine the main task based on the information, and then divide the main task into the R tasks. Herein, that the R tasks are all tasks in the main task is used as an example. It may be understood that the R tasks may also be some tasks in the main task. This is not limited in this embodiment of this application.

Optionally, the main task is used to train a large AI model, and after the R tasks are processed, the large AI model may be obtained through training. This process may be referred to as a distributed training process for the large AI model. The large AI model may include the following several convolutional neural network models: a VGG16 model, a VGG19 model, a residual network (residual network, resnet) 50 model, a MobileNet (mobilenet) model, and the like. In a process of being processed, the R tasks may exchange data with each other, to fuse data obtained in a process in which another task is processed. Training efficiency of the distributed training process of the large AI model is greatly limited by communication efficiency between the target processing nodes.

S102: The control node determines whether a first electrical switching node that satisfies a target condition exists, where the target condition includes: The first electrical switching node is connected to at least R idle processing nodes. When at least one first electrical switching node that satisfies the target condition exists, S103 is performed; or when no first electrical switching node that satisfies the target condition exists, S104 is performed.

In this embodiment of this application, an example in which the target processing node is the idle processing node is used. It may be understood that the target processing node may alternatively be not the idle processing node. The idle processing node refers to a processing node that is not processing a task. If a processing node is processing a task, the processing node is not the idle processing node, but a non-idle processing node. Each first electrical switching node is connected to at least one processing node, but there may be an idle processing node or may be no idle processing node in these processing nodes. A quantity of idle processing nodes connected to each first electrical switching node is not fixed.

After determining the R to-be-processed tasks, the control node may determine the quantity of idle processing nodes connected to each first electrical switching node, to determine whether each first electrical switching node satisfies the target condition.

Optionally, the control node is configured to manage the processing node and each switching node. The control node can obtain a topology structure (indicating a connection relationship between the processing node and each switching node) of the processing system and status information of each processing node. The status information indicates whether the processing node is an idle processing node. Therefore, the control node may determine, based on the topology structure and the status information, whether each first electrical switching node satisfies the target condition.

Optionally, the control node may send a query request to each first electrical switching node, to indicate the first electrical switching node to report, to the control node, information about whether the first electrical switching node satisfies the target condition. Afterwards, the control node may determine, based on the information, whether the first electrical switching node satisfies the target condition.

The control node may further determine, in another manner, whether each first electrical switching node satisfies the target condition. Details are not listed one by one in this embodiment of this application.

S103: The control node determines, in processing nodes connected to one of at least one first electrical switching node that satisfies the target condition, R idle target processing nodes configured to process the R tasks in one-to-one correspondence. S105 is performed.

For example, when the at least one first electrical switching node includes one first electrical switching node, the control node may directly determine the R target processing nodes in processing nodes connected to the first electrical switching node.

When the at least one first electrical switching node includes more than one first electrical switching node, the control node may determine the R target processing nodes in processing nodes connected to a first electrical switching node connected to a smallest quantity of idle processing nodes in the at least one first processing node. In other words, the one first electrical switching node connected to the R target processing nodes determined by the control node is the first electrical switching node connected to the smallest quantity of idle processing nodes in the at least one first processing node. In this way, when the R target processing nodes subsequently process tasks, idle processing nodes in the data processing system are distributed in a centralized manner, to reduce a fragmentation degree of resources in the processing system, to help the control node select target processing nodes when subsequently performing the node control method again.

For example, it is assumed that R = 4. There are four first electrical switching nodes that satisfy the target condition in the processing system, and quantities of idle processing nodes connected to the four first electrical switching nodes are respectively 4, 5, 6, and 7. In this case, the control node may determine the R target processing nodes in processing nodes connected to the first electrical switching node connected to the idle processing nodes whose quantity is 4.

Optionally, the one first electrical switching node may be any electrical switching node in the at least one first processing node. This is not limited in this embodiment of this application.

When the control node selects the R target processing nodes in processing nodes connected to one first electrical switching node, if the processing nodes connected to the first electrical switching node include a plurality of processing nodes that belong to a same device (for example, a server), the control node preferentially selects the target processing nodes from the plurality of processing nodes. Because the plurality of processing nodes that belong to the same device are interconnected by using a communication bus in the device, a physical distance between these processing nodes is short, and communication efficiency between these communications nodes is high. In this case, high communication efficiency can be ensured when the target processing nodes need to perform communication when processing tasks.

S104: The control node determines R target processing nodes in processing nodes connected to a plurality of first electrical switching nodes. S105 is performed.

When a quantity of idle processing nodes connected to each first electrical switching node is less than R, the control node needs to combine the R target processing nodes in processing nodes connected to more than one first electrical switching node.

For example, when determining the R target processing nodes in the processing nodes connected to the plurality of first electrical switching nodes, the control node may determine q second node groups in the processing nodes connected to the plurality of first electrical switching nodes, to obtain the R target processing nodes. $q \geq 2$, and the second node group includes p target processing nodes connected to a same first electrical switching node, where $p \geq 1$, and p * q = R. The R target processing nodes include the q second node groups. A quantity of second node groups connected to the first electrical switching node may be greater than 1 or may be equal to 1, and quantities of second node groups connected to different first electrical switching nodes may be the same or may be different. This is not limited in this embodiment of this application.

When determining the q second node groups in the processing nodes connected to the plurality of first electrical switching nodes, the control node may sequentially determine the second node group in processing nodes connected to the first electrical switching nodes in the processing system, until the q second node groups are determined. An initial value of p is a largest value in quantities of processing nodes connected to the first electrical switching nodes, or an initial value of p is a smaller value in the largest value and R. When the control node cannot determine the q second node groups in the processing nodes connected to the plurality of first electrical switching nodes, the control node may decrease p, and repeatedly perform the operation of sequentially determining the second node group in the processing nodes connected to the first electrical switching nodes in the processing system, until the q second node groups are determined or p is decreased to 0.

It can be learned that the control node may attempt to search the processing system for the q second node groups based on the initial value of p. If determining that the q second node groups do not exist in the processing system, the control node may decrease p, and repeatedly attempt to search the processing system for the q second node groups based on the decreased p. When the control node finds the q second node groups, or p is decreased to 0, the control node may stop performing the operation of repeatedly searching for the q second node groups. If the control node still cannot determine the q second node groups when p is 1, it indicates that a quantity of all idle processing nodes in the processing system is less than R, and the processing system does not include R idle processing nodes. After reducing p to 0, the control node may stop attempting to search for the q second node groups. If the control node does not determine the q second node groups after stopping attempting to search for the q second node groups, the control node may attempt to search for the q second node groups again after waiting for specific duration (in this case, the quantity of idle processing nodes may increase).

Optionally, the control node may sequentially determine, in ascending order (or random order or the like) of quantities of idle processing nodes connected to the first electrical switching nodes, the second node group in the processing nodes connected to the first electrical switching nodes in the processing system. In this way, the selected target processing nodes may be distributed in a centralized manner, and when the R target processing nodes process tasks, idle processing nodes in the data processing system are distributed in a centralized manner, to reduce a fragmentation degree of resources in the processing system, to help the control node select target processing nodes when subsequently performing the node control method again.

Optionally, before the control node decreases p, p may be 2 to a $k^{th}$ power. When the control node decreases p, p may be decreased to 2 to a $(k - 1)^{th}$ power. Certainly, p may not be 2 to the $k^{th}$ power, and the control node may alternatively decrease p in another manner, for example, decrease p to p - 1.

In this embodiment of this application, an example in which the control node determines, in the manner of determining the q second node groups, the R target processing nodes in the processing nodes connected to the plurality of first electrical switching nodes is used. The control node may alternatively determine, in another manner, the R target processing nodes in the processing nodes connected to the plurality of first electrical switching nodes. For example, the control node may randomly determine the R target processing nodes in the processing nodes connected to the plurality of first electrical switching nodes, or the control node may determine, according to an instruction of a user, the R target processing nodes in the processing nodes connected to the plurality of first electrical switching nodes. Quantities of target processing nodes connected to different first electrical switching nodes may be the same or may be different, and a quantity of target processing nodes connected to the first electrical switching nodes may be an integer multiple of p, or may not be an integer multiple of p. This is not limited in this embodiment of this application.

tion.

According to S102 to S104, the control node can determine the R idle target processing nodes configured to process the R to-be-processed tasks in one-to-one correspondence. It may be understood that the control node may alternatively determine the R target processing nodes in another manner different from the manner in S102 to S104. For example, before or after S101 or in S101, the control node may further receive information about the R target processing nodes, and determine the R target processing nodes based on the information.

In the manner of determining the R target processing nodes provided in S102 to S104, the control node preferentially selects the R target processing nodes connected to the same first electrical switching node, and secondarily selects the R target processing nodes connected to the plurality of first electrical switching nodes. When the R target processing nodes are connected to the same first electrical switching node, a physical distance between the R target processing nodes is short. In this way, data exchange efficiency of the R target processing nodes can be improved, thereby reducing network load and avoiding congestion. In addition, when the R target processing nodes are connected to the same first electrical switching node, when the R target processing nodes process tasks, idle processing nodes in the data processing system are distributed in a centralized manner, to reduce a fragmentation degree of resources in the processing system, to help the control node subsequently select target processing nodes again.

It may be understood that the control node may alternatively not need to perform S102 and S103, but directly perform S104 after S101. In other words, regardless of whether a first electrical switching node connected to at least R idle processing nodes exists, the control node may determine the R target processing nodes in the processing nodes connected to the plurality of first electrical switching nodes. In this case, the p second node groups may be connected to one or more first electrical switching nodes.

S105: The control node deploys a target path group when the R target processing nodes include at least one first node group, where the first node group includes: two target processing nodes that need to communicate with each other when executing corresponding tasks and that are connected to different first electrical switching nodes, the target path group includes a communication path between target processing nodes in the first node group, and the communication path passes through the first electrical switching node, an optical switching node, and a second electrical switching node. S106 is performed.

Optionally, in this embodiment of this application, an example in which the target path group includes a communication path between every two target processing nodes in the R target processing nodes is used. When the R target processing nodes include the at least one first node group, if the R target processing nodes further include another target processing node other than the at least one first node group, the target path group may not include a communication path related to the another target processing node.

The control node needs to deploy the target path group when the R target processing nodes include the at least one first node group. When the R target processing nodes do not include the first node group, the R target processing nodes may be connected to each other by using the first electrical switching node or the communication bus in the device. In this case, the control node does not need to deploy the target path group.

For example, when the R target processing nodes are connected to a same first electrical switching node, a route between the target processing nodes connected to the first electrical switching node may be configured in the first electrical switching node. Therefore, the R target processing nodes may be connected based on these routes. The route may indicate that data, received from which port of the first electrical switching node, that is used to be sent to a particular processing node should be output through which port of the first electrical switching node. The first electrical switching node forwards the data based on the route, so that the data can be transmitted along the communication path in the target path group.

For another example, when the R target processing nodes include the at least one first node group, target processing nodes in the first node group need to be connected by using the first electrical switching node, the optical switching node, and the second electrical switching node. The control node may separately configure routes in the first electrical switching node and the second electrical switching node, and set a mapping relationship between ports of the optical switching node, to deploy the target path group. A route configured by the control node in an electrical switching node (for example, the first electrical switching node and the second electrical switching node) indicates how data is transmitted in the electrical switching node. After the control node sets the mapping relationship between ports of the optical switching node, an optical signal that carries data and that is input through a particular port of the optical switching node is transmitted to a port that has a mapping relationship with the port. The first electrical switching node forwards the data based on the route configured by the control node, the second electrical switching node forwards the data based on the route configured by the control node, and the optical switching node transmits, based on the mapping relationship configured by the control node, the optical signal that carries the data, so that the data can be transmitted along the communication path in the target path group.

Optionally, when the R target processing nodes are divided into q second node groups, and each second node group includes p target processing nodes connected to a same first electrical switching node, ports connected to the optical switching node in all second electrical switching nodes in the processing system include p port groups. Each port group includes q idle ports that belong to a same second electrical switching node, and when a port does not forward data, the port is an idle port. The p port groups belong to one or more second electrical switching nodes, and the q second node groups are connected to one or more processing nodes. In this case, the target path group is used to connect the q idle ports in each port group to the q second node groups (where the q idle ports are connected to the q second node groups in one-to-one correspondence), and connect the p target processing nodes in each second node group to the p port groups (where the p target processing nodes are connected to the p port groups in one-to-one correspondence). For example, the target path group is used to connect an $f^{th}$ idle port in a $d^{th}$ port group to a $d^{th}$ target processing node in an $f^{th}$ second node group, where $1 \le d \le p$, and $1 \le f \le q$.

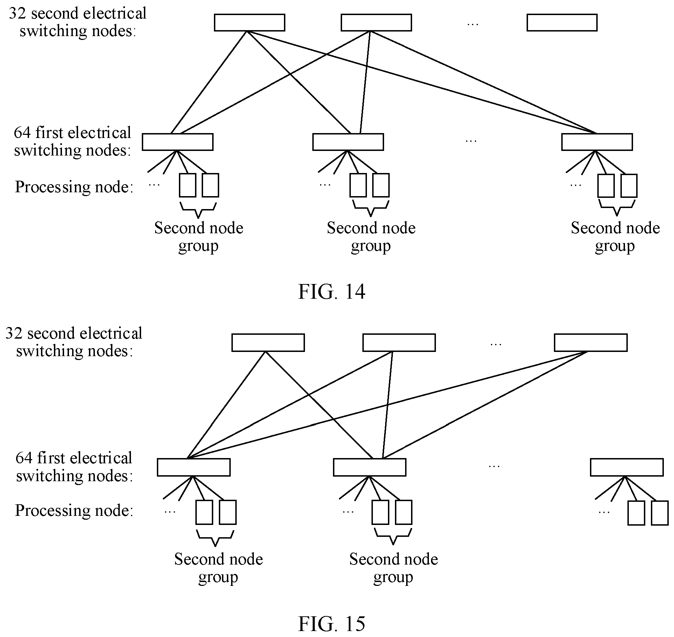

For example, as shown in FIG. 14, it is assumed that a processing system includes 64 first electrical switches and 32 second electrical switches (where an optical switching node is not shown in FIG. 14), each first electrical switch has 32 uplink ports and 32 downlink ports, and each second electrical switch has 64 downlink ports. p = 2, q = 64, each first electrical switch may be connected to one second node group, and each second node group includes two target processing nodes. There are two second electrical switches in which each second electrical switch has one port group, and each port group includes 64 idle ports. Two downlink ports of each first electrical switch are connected to two target processing nodes, and two uplink ports are connected to two downlink ports in the two port groups. The idle ports in each port group in the two port groups are downlink ports, and the 64 idle ports in each port group are connected to 64 uplink ports of the 64 first electrical switches.

For another example, as shown in FIG. 15, it is assumed that a processing system includes 64 first electrical switches and 32 second electrical switches (where an optical switching node is not shown in FIG. 15), each first electrical switch has 32 uplink ports and 32 downlink ports, and each second electrical switch has 64 downlink ports. p = 32, q = 2, there are two first electrical switches in which each first electrical switch is connected to one second node group, and each second node group includes 32 target processing nodes. Each second electrical switch has one port group, the processing system includes 32 port groups in total, and each port group includes two idle ports. 32 downlink ports of each first electrical switch in the two first electrical switches are connected to 32 target processing nodes, and 32 uplink ports are connected to 32 downlink ports in the 32 port groups. The idle ports in each port group in the 32 port groups are downlink ports, and two idle ports in each port group are connected to two uplink ports of the two first electrical switches.

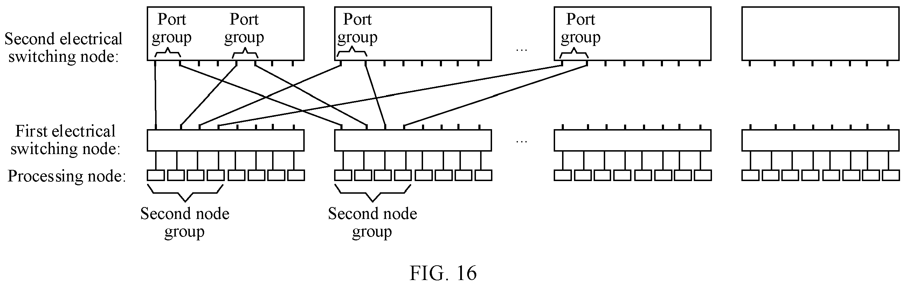

For another example, as shown in FIG. 16 (where an optical switching node is not shown in FIG.

16), it is assumed that p = 4, q = 2, there are two first electrical switches in which each first electrical switch is connected to one second node group, and each second node group includes four target processing nodes. There are two second electrical switches in which each second electrical switch has one port group, there is one second electrical switch that has two port groups, and each port group includes four idle ports. Four downlink ports of each first electrical switch in the two first electrical switches are connected to four target processing nodes, and four uplink ports are connected to four downlink ports in the four port groups. The idle ports in each port group in the four port groups are downlink ports, and the four idle ports in each port group are connected to two uplink ports of the two first electrical switches.

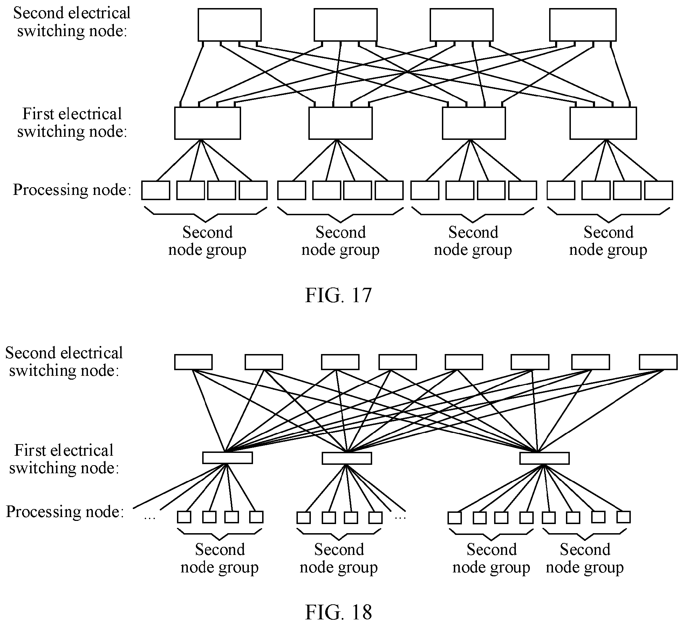

For another example, as shown in FIG. 17 (where an optical switching node is not shown in FIG. 17), it is assumed that p = 4, q = 4, there are two first electrical switches in which each first electrical switch is connected to one second node group, there is one first electrical switch that is connected to two second node groups, and each second node group includes four target processing nodes. There is one second electrical switch that has four port groups, and each port group includes four idle ports. Four downlink ports of each first electrical switch in the two first electrical switches are connected to four target processing nodes, and four uplink ports are connected to four downlink ports in the four port groups. The idle ports in each port group in the four port groups are downlink ports, and the four idle ports in each port group are connected to two uplink ports of the two first electrical switches and two uplink ports of the first electrical switch.

In this embodiment of this application, an example in which the R target processing nodes are divided into q second node groups, each second node group includes p target processing nodes connected to a same first electrical switching node, ports connected to the optical switching node in all second electrical switching nodes in the processing system include p port groups, and each port group includes q idle ports that belong to a same second electrical switching node is used. A port connected to each second node group in the first electrical switching node may be referred to as a port in a virtual first electrical switching node, and each port group in the second electrical switching node may be referred to as a port in a virtual second electrical switching node. It may be understood that, when the R target processing nodes are divided into q second node groups, and each second node group includes the p target processing nodes connected to the same first electrical switching node, ports connected to the optical switching node in all second electrical switching nodes in the processing system may not include p port groups, and a quantity of idle ports in the port groups may not be q.

For example, as shown in FIG. 18, it is assumed that there are two first electrical switching nodes that are both connected to one second node group in a processing system, there is one first electrical switching node that is connected to two second node groups, and the second node group includes four target processing nodes. To implement interconnection between any two target processing nodes in the 16 target processing nodes, eight second electrical switching nodes may each have one port group, and the port group includes three idle ports. A target path group is connected to each first electrical switching node in the three first electrical switching nodes and each second electrical switching node in the eight second electrical switching nodes, and the target path group passes through a physical link between each first electrical switching node in the three first electrical switching nodes and each second electrical switching node in the eight second electrical switching nodes.

It can be learned by comparing FIG. 17 with FIG. 18 that, when the R target processing nodes are divided into q second node groups, and each second node group includes p target processing nodes, if ports connected to the optical switching node in all second electrical switching nodes in the processing system include p port groups, and each port group includes q idle ports, the target path group occupies few resources.

Optionally, when the target path group includes a plurality of communication paths (where the communication path is used to connect two processing nodes in the R processing nodes), the communication paths in the target path group may be independent of each other, and the communication paths in the target path group do not overlap. In this way, there is no bandwidth sharing problem between data transmitted on different communication paths in the target path group, and data transmitted on each communication path can exclusively occupy a bandwidth. This ensures transmission efficiency of the data transmitted on each communication path, and avoids path congestion caused by overlapping of these communication paths. Certainly, the communication paths in the target path group may not be independent of each other. This is not limited in this embodiment of this application.

Optionally, before the control node deploys the target path group, if another path (passing through the first electrical switching node, the optical switching node, and the second electrical switching node) for communication between non-idle processing nodes is deployed in the processing system, the communication path in the target path group is independent of the another path. In other words, the communication path that is in the target path group and that is deployed by the control node does not overlap a non-idle communication path that is already deployed in the processing system. In this way, data transmitted on the communication path in the target path group and the another deployed path can be independent of each other. This avoids path congestion caused by path overlapping, ensures data transmission efficiency, and does not affect the non-idle processing nodes.

The R target processing nodes, the nodes that the target path group passes through, and the physical links may form a resource block corresponding to the R tasks. The resource block and another resource in the processing system may be independent of each other. Therefore, the R tasks are physically isolated from the another task, to prevent these tasks from preempting resources from each other. This reduces a probability of congestion of the communication path, and reduces mutual interference between the tasks. When the R target processing nodes are divided into q second node groups, each second node group includes p target processing nodes, ports connected to the optical switching node in all the second electrical switching nodes in the processing system include p port groups, each port group includes q idle ports, the p target processing nodes are connected to the p port groups, and the q second node groups are connected to the q idle ports, an architecture of the resource block is a Clos architecture, the resource block may be referred to as a Clos resource block, and a scale of the Clos resource block may be represented by p * q.

S106: The control node controls the R target processing nodes to process the R tasks in one-to-one correspondence.

After the target path group is deployed, the control node may separately deliver the tasks used for processing to the R target processing nodes, so that the R target processing nodes process the R tasks in one-to-one correspondence. The R target processing nodes are in one-to-one correspondence with the R tasks, and each target processing node is configured to process a corresponding task. In addition, in a process of processing the corresponding task, if the target processing node needs to communicate with another target processing node, the target processing node may communicate with the another target processing node by using the target path group deployed by the control node in S105, to exchange data with the another target processing node.

After the R tasks are processed, the control node may delete the deployed target path group, to facilitate subsequent deployment of another path. When deleting the target path group, the control node may delete the route that is set in the electrical switching node when the target path group is deployed, and the mapping relationship that is between ports and that is set in the optical switching node. It may be understood that after the R tasks are processed, the control node may not delete the deployed target path group. This is not limited in this embodiment of this application. If not deleting the deployed target path group after the R tasks are processed, when subsequently deploying another path, the control node may modify the deployed target path group (for example, modify the route in the electrical switching node that the target path group passes through, and the mapping relationship between ports in the optical switching node).

The control node needs to determine the target path group before deploying the target path group in S105.

For example, when determining the target path group, the control node may first determine a plurality of candidate path groups of the target path group, and then select one candidate path group from the plurality of candidate path groups as the target path group. A function of the candidate path group is the same as that of the target path group. For the candidate path group, refer to the descriptions of the target path group. Details are not described in this embodiment of this application.

Optionally, the control node may randomly select one candidate path group from the plurality of candidate path groups as the target path group.

Optionally, the control node may select a candidate path group corresponding to a smallest target parameter in the plurality of candidate path groups as the target path group. A target parameter corresponding to the candidate path group is negatively correlated to a concentration degree of idle ports connected to the optical switching node in all the second electrical switching nodes after the candidate path group is deployed.

A smaller target parameter corresponding to the candidate path group indicates a higher concentration degree of the idle ports connected to the optical switching node in all the second electrical switching nodes after the candidate path group is deployed, and a lower fragmentation degree of resources in the processing system, to help the control node subsequently deploy a path. In this embodiment of this application, the control node selects the candidate path group corresponding to the smallest target parameter as the target path group. In this way, after the target path group is deployed on the control node, the concentration degree of the idle ports connected to the optical switching node in all the second electrical switching nodes is the highest, and the fragmentation degree of the resources in the processing system is the lowest. It may be understood that the control node may select any candidate path group corresponding to a non-largest target parameter (for example, a candidate path group corresponding to a second smallest target parameter) in the plurality of candidate path groups as the target path group. This is not limited in this embodiment of this application.

The target parameter may be implemented in a plurality of implementations. One implementation is applicable to the following case: The R target processing nodes include q second node groups, each second node group includes p target processing nodes connected to a same first electrical switching node, ports connected to the optical switching node in all the second electrical switching nodes in the processing system include p port groups, and each port group includes q idle ports that belong to a same second electrical switching node; and the q second node groups are connected to at least one first electrical switching node, and the p port groups belong to one or more second electrical switching nodes. In this implementation, for one candidate path group, the candidate path group is used to connect the q idle ports in each port group to the q second node groups, and connect the p target processing nodes in each second node group to the p port groups. The target parameter corresponding to the candidate path group is $\sum_{j=1}^{P} s_j * SP_j$ , where P is a quantity of second electrical switching nodes in the processing system, $S_j$ represents a quantity of port groups in a $j^{th}$ second electrical switching node, and $SP_j$ represents a quantity of idle ports connected to the optical switching node in the $j^{th}$ second electrical switch before the candidate path group is deployed. The target parameter is not limited to this implementation. For example, the target parameter may alternatively be equal to

$$1 + \sum_{j=1}^{P} s_j * SP_j$$

or the like.

In this embodiment of this application, an example in which the control node can determine the target path group after determining the R target processing nodes is used. Optionally, if the control node cannot determine the target path group, the control node may update the determined R target processing nodes, and repeatedly perform the operation of determining the target path group until the target path group is determined or the R target processing nodes cannot be updated.

When updating the R target processing nodes, the control node may re-determine the R target processing nodes in the manner of determining the R target processing nodes in the foregoing process, and it needs to be ensured that the re-determined R target processing nodes are not completely the same as original R target processing nodes.

For example, if at least one first electrical switching node that satisfies a target condition exists, the control node may determine the updated R target processing nodes in processing nodes connected to one first electrical switching node in the first electrical switching nodes. If no first electrical switching node that satisfies the target condition exists, the control node may determine the updated R processing nodes in processing nodes connected to a plurality of first electrical switching nodes. For example, the control node may further decrease p in a process of determining R processing nodes last time, use the decreased p as an initial value of p, and sequentially determine the second node group in the processing nodes connected to the first electrical switching nodes in the processing system, until the q second node groups are determined. When the control node cannot determine the q second node groups in the processing nodes connected to the plurality of first electrical switching nodes, the control node may decrease p, and repeatedly perform the operation of sequentially determining the second node group in the processing nodes connected to the first electrical switching nodes in the processing system, until the q second node groups are determined or p is decreased to 0.

It can be learned from the foregoing content that the control node needs to determine the R target processing nodes in S102 to S104. When the R target processing nodes include the at least one first node group, the control node further needs to determine the to-be-deployed target path group before S105. Overall, before S102 to S105, the control node may determine second information based on first information. The first information includes a quantity R of to-be-processed tasks, a topology structure of the processing system, status information (information Gi indicating whether an $i^{th}$ processing node is an idle processing node) of each processing node, and status information of each link. The status information is, for example, status information $X_{i,j,k}$ of a physical link between an $i^{th}$ first electrical switch, a $j^{th}$ optical switch, and a $k^{th}$ second electrical switch (where a value may be 0 or 1, 0 indicates that these physical links are idle links, and 1 indicates that these physical links are non-idle links). The second information includes identifiers (for example, numbers) of the determined R target processing nodes and information about the target path group. There are various implementations of the information about the target path group. For example, the information about the target path group includes information about a port of a first electrical switch, an optical switch, and a port of a second electrical switch that are connected to the target path group, for example, an identifier (for example, a number) of the port of the first electrical switch, an identifier (for example, a number) of the optical switch, and an identifier (for example, a number) of the port of the second electrical switch. For another example, the information about the target path group includes information about a first electrical switch, an optical switch, and a second electrical switch that are connected to the target path group. For another example, the information about the target path group includes status information of each link after the target path group is deployed, and the status information is, for example, status information $Y_{i,j,k}$ of the physical link between the $i^{th}$ first electrical switch, the $j^{th}$ optical switch, and the $k^{th}$ second electrical switch (where a value may be 0 or 1, 0 indicates that these physical links are idle links, and 1 indicates that these physical links are non-idle links).

In S102 to S104, the control node determines the identifiers of the R target processing nodes in the second information based on the quantity R of to-be-processed tasks, the topology structure of the processing system, and the status information of each processing node in the first information. When the R target processing nodes are divided into q second node groups, and each second node group includes p target processing nodes, the control node may further determine, in S102 to S104, two values p and q, and a quantity of second node groups connected to each first electrical switching node (for example, a quantity $L_i$ of second node groups connected to the $i^{th}$ first electrical switching node).

After S104 and before S105, the control node determines the information about the target path group based on the topology structure of the processing system and the status information of each link in the first information and the information determined in S102 to S104.

When the control node selects the target path group from the plurality of candidate path groups, and the target parameter corresponding to the candidate path group is $\sum_{j=1}^{P} s_j * SP_j$, after S104 and before S105, the control node further needs to determine $S_j$ and $SP_j$, to determine target parameters corresponding to all candidate path groups, and then select the target path group from the plurality of candidate path groups based on these target parameters.

When determining the target path group, the control node may consider the following constraints.

Constraint 1: When there are Q/P physical links between each optical switching node and each second electrical switching node, when determining the target path group, the control node needs to consider that a non-idle communication path passes through a maximum of Q/P physical links from each optical switching node to each second electrical switching node after the target path group is deployed. That is, $\sum_{i=1}^{Q} Y_{i,j,k} \leq \dfrac{Q}{P}$, where $1 \leq k \leq P$, and $1 \leq j \leq P$. A communication path is not idle when the communication path forwards data.

Constraint 2: When there is only one path from each first electrical switching node to each second electrical switching node through each optical switching node, when determining the target path group, the control node needs to consider that there is at most one path from each first electrical switching node to each second electrical switching node through each optical switching node in non-idle communication paths after the target path group is deployed.

Constraint 3: When the R target processing nodes are divided into q second node groups, each second node group includes p target processing nodes, all the second electrical switching nodes have p port groups, and each port group includes q idle ports, when determining the target path group, the control node needs to consider that $\sum_{k=1}^{P} Y_{i,j,k} = s_j * L_i$ and $\sum_{k=1}^{P} s_j = p$ after the target path group is deployed, where $1 \leq i \leq Q$, and $1 \leq j \leq P$.

Constraint 4: Before the target path group is deployed, if another path (passing through the first electrical switching node, the optical switching node, and the second electrical switching node) for communication between non-idle processing nodes is deployed in the processing system, the control node needs to consider that the communication path in the target path group is independent of the another path after the target path group is deployed. That is, $Y_{i,j,k} \geq X_{i,j,k}$.

In conclusion, the processing system provided in this embodiment of this application not only includes the first electrical switching node and the second electrical switching node, but also includes the optical switching node and the control node. There is a physical link between the optical switching node and both the first electrical switching node and the second electrical switching node, and a mapping relationship between ports of the optical switching node can be flexibly adjusted by the control node, so that a connection relationship between the first electrical switching node and the second electrical switching node can be flexibly adjusted by the control node. In this way, flexibility of a switching network is improved. The switching network can provide a large quantity of communication paths, so that a probability of failing to exchange data between processing nodes through the switching network is reduced, and impact on processing the tasks by the processing nodes is reduced.

For example, when different communication paths are independent of each other, and the communication path in the target path group is independent of the deployed another path for communication between the non-idle processing nodes, the control node can flexibly adjust the mapping relationship between the ports of the optical switching node, so that the processing nodes can exchange data through the switching network as much as possible, and the non-idle processing nodes are not affected.

In addition, if Solution 2 or Solution 3 above is used to avoid physical link congestion as much as possible, a resource waste is also caused or processing nodes that are exchanging data are affected.

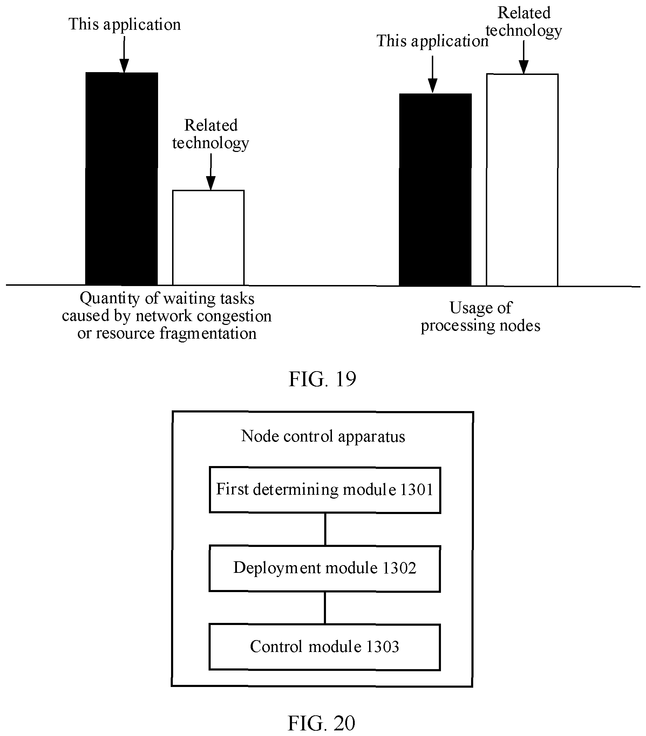

For example, as shown in FIG. 19, compared with a processing system without an optical switching node or a control node provided in a related technology, the processing system provided in embodiments of this application has the following advantages: 1. A quantity of waiting tasks caused by network congestion or resource fragmentation is significantly reduced, so that completion time of a great part of tasks is greatly reduced. 2. Usage of the processing nodes is also increased, which shows an effect in reducing system resource fragmentation in this application, so that the processing nodes in the processing system can be fully utilized, thereby improving resource utilization.

In addition, the control node can implement path deployment. Therefore, a static route does not need to be configured by personnel, so that path deployment difficulty is greatly reduced, and operation and maintenance difficulty is low.

In the foregoing embodiment, an example in which the control node deploys the target path group based on the R to-be-processed tasks and controls the R target processing nodes to process the R tasks is used. It may be understood that, in a running process, the control node may perform this operation for a plurality of times. In addition, to-be-processed tasks determined each time this operation is performed may be the same or different, quantities of tasks may be the same or different, corresponding target path groups may be the same or different, and R target processing nodes may be the same or different.

With reference to FIG. 1 to FIG. 19, the foregoing describes in detail the node control method provided in this application. It may be understood that, to implement the functions described in the foregoing methods, the control node needs to include corresponding hardware and/or software modules corresponding to the functions. This application can be implemented in a form of hardware or a combination of hardware and computer software with reference to the execution processes of the methods described in embodiments disclosed in this specification. Whether a function is performed by hardware or hardware driven by computer software depends on particular applications and design constraint conditions of the technical solutions. A person skilled in the art may use different manners to implement the described functions for each particular application with reference to the embodiments, but it should not be considered that this implementation goes beyond the scope of this application.

In the embodiments, a corresponding control apparatus may be divided into functional modules according to the foregoing method embodiment. For example, each functional module may be obtained through division based on each corresponding function, or two or more functions may be integrated into one processing module. The integrated module may be implemented in a form of hardware.

When the functional module division manner is used, the following describes a control node provided in this application with reference to FIG. 20.

FIG. 20 is a diagram of a structure of a node control apparatus according to an embodiment of this application. The node control apparatus may belong to the foregoing control node. As shown in FIG. 20, the node control apparatus includes a first determining module 1301, a deployment module 1302, and a control module 1303.

The first determining module 1031 is configured to determine R target processing nodes that are configured to process R tasks in one-to-one correspondence, where R ≥ 2. For an operation performed by the first determining module 1301, refer to related content of S102 to S104 in the foregoing embodiment. Details are not described in this embodiment of this application.

The deployment module 1302 is configured to deploy a target path group when the R target processing nodes include at least one first node group, where the first node group includes: two target processing nodes that need to communicate with each other when executing corresponding tasks and that are connected to different first electrical switching nodes, the target path group includes a communication path between target processing nodes in the first node group, and the communication path passes through the first electrical switching node, an optical switching node, and a second electrical switching node. For an operation performed by the deployment module 1302, refer to related content of S105 in the foregoing embodiment. Details are not described in this embodiment of this application.

The control module 1303 is configured to control the R target processing nodes to process the R tasks in one-to-one correspondence. For an operation performed by the control module 1303, refer to related content of S106 in the foregoing embodiment. Details are not described in this embodiment of this application.

In conclusion, the processing system provided in this embodiment of this application not only includes the first electrical switching node and the second electrical switching node, but also includes the optical switching node and the control node. There is a physical link between the optical switching node and both the first electrical switching node and the second electrical switching node, and a mapping relationship between ports of the optical switching node can be flexibly adjusted by the control node, so that a connection relationship between the first electrical switching node and the second electrical switching node can be flexibly adjusted by the control node. In this way, flexibility of a switching network is improved, so that a probability of failing to exchange data between processing nodes through the switching network is reduced, and impact on processing the tasks by the processing nodes is reduced.

Optionally, there is a physical link between each optical switching node and each first electrical switching node and between each optical switching node and each second electrical switching node.

Optionally, the at least two first electrical switching nodes include Q first electrical switching nodes, the at least one optical switching node includes P optical switching nodes, and the at least one second electrical switching node includes P second electrical switching nodes. The first electrical switching node has P downlink ports and P uplink ports, the optical switching node has Q downlink ports and Q uplink ports, and the second electrical switching node has Q downlink ports. There is a physical link between different uplink ports of the first electrical switching node and different optical switching nodes, different downlink ports of the first electrical switching node are connected to different processing nodes, the Q uplink ports of the optical switching node are divided into P groups of uplink ports, and there is a physical link between different groups of uplink ports in the P groups of uplink ports and different second electrical switching nodes.

Optionally, the node control apparatus satisfies at least one of the following conditions: There is a physical link between a $y^{th}$ uplink port of an $x^{th}$ first electrical switching node and an $x^{th}$ downlink port of a $y^{th}$ optical switching node, where $1 \le x \le Q$, and $1 \le y \le P$; and the Q downlink ports of the second electrical switching node are divided into P groups of downlink ports, and there is a physical link between a $w^{th}$ group of uplink ports of a $z^{th}$ optical switching node and a $z^{th}$ group of downlink ports of a $w^{th}$ second electrical switching node, where $1 \le z \le P$, and $1 \le w \le P$.

Optionally, P = Q.

Optionally, before the control module controls the R target processing nodes to process the R tasks in one-to-one correspondence, the target processing nodes are idle processing nodes or non-idle processing nodes.

Optionally, the first determining module is configured to: when at least one first electrical switching node that satisfies a target condition exists, determine the R target processing nodes in processing nodes connected to one first electrical switching node in the at least one first electrical switching node, where the target condition includes: The first electrical switching node is connected to at least R idle processing nodes; or when none of the at least two first electrical switching nodes satisfies the target condition, determine the R target processing nodes in processing nodes connected to a plurality of first electrical switching nodes.

Optionally, when a quantity of first electrical switching nodes in the at least one first electrical switching node is greater than 1, the one first electrical switching node is a first electrical switching node connected to a smallest quantity of idle processing nodes in the at least one first processing node.

Optionally, the first determining module is configured to determine q second node groups in the processing nodes connected to the plurality of first electrical switching nodes, where $q \ge 2$, the second node group includes p target processing nodes connected to a same first electrical switching node, where $p \ge 1$, and the R target processing nodes include the q second node groups.

Optionally, different first electrical switching nodes in the plurality of first electrical switching nodes are connected to a same quantity of second node groups.

Optionally, the first determining module is configured to: sequentially determine the second node group in processing nodes connected to the at least two first electrical switching nodes, until the q second node groups are determined, where an initial value of p is a largest value in quantities of processing nodes connected to the first electrical switching nodes, or an initial value of p is a smaller value in the largest value and R; and when the q second node groups cannot be determined, decrease p, and repeatedly perform the operation of sequentially determining the second node group in the processing nodes connected to the at least two first electrical switching nodes, until the q second node groups are determined or p is decreased to 0.

Optionally, before p is decreased, p is 2 to a $k^{th}$ power, and decreasing p includes decreasing p to 2 to a $(k - 1)^{th}$ power.

Optionally, the first determining module is configured to sequentially determine, in ascending order of quantities of idle processing nodes connected to the first electrical switching nodes, the second node group in the processing nodes connected to the at least two first electrical switching nodes.

Optionally, the target path group includes a communication path between every two target processing nodes connected to different first electrical switching nodes in the R target processing nodes.

Optionally, the R target processing nodes are divided into q second node groups, and the second node group includes p target processing nodes connected to a same first electrical switching node, where $q \ge 2$, and $p \ge 1$; ports connected to the optical switching node in the at least one second electrical switching node include p port groups, and the port group includes q idle ports that belong to a same second electrical switching node; and the target path group is used to connect the q idle ports to the q second node groups, and connect the p target processing nodes to the p port groups.

Optionally, when the target path group includes a plurality of communication paths, different communication paths are independent of each other.

Optionally, before the target path group is deployed, another path for communication between non-idle processing nodes is deployed in the processing system, the communication path in the target path group is independent of the another path, and the another path passes through the first electrical switching node, the optical switching node, and the second electrical switching node.

Optionally, the node control apparatus further includes: a second determining module (not shown in FIG. 20), configured to determine a plurality of candidate path groups of the target path group; and a third determining module (not shown in FIG. 20), configured to determine that a candidate path group corresponding to a smallest target parameter is the target path group, where a target parameter corresponding to the candidate path group is negatively correlated to a concentration degree of idle ports connected to the optical switching node in the at least one second electrical switching node after the candidate path group is deployed.

Optionally, the R target processing nodes include the q second node groups, and the second node group includes p target processing nodes connected to a same first electrical switching node, where $q \ge 2$, and $p \ge 1$. For one candidate path group, ports connected to the optical switching node in the at least one second electrical switching node include p port groups, the port group includes q idle ports that belong to a same second electrical switching node, and the idle ports are not connected to the processing node before the candidate path group is deployed; the candidate path group is used to connect the q idle ports to the q second node groups, and connect the p target processing nodes to the p port groups; and the target parameter corresponding to the candidate path group is

$$\sum_{j=1}^{P} s_j * SP_j$$

, where P is a quantity of second electrical switching nodes, $S_j$ represents a quantity of port groups in a $j^{th}$ second electrical switching node, and $SP_j$ represents a quantity of idle ports connected to the optical switching node in the $j^{th}$ second electrical switch before the candidate path group is deployed.

Optionally, the node control apparatus further includes an iteration module (not shown in FIG. 20), configured to: when the to-be-deployed target path group cannot be determined, update the R target processing nodes, and repeatedly perform the operation of determining a target path group until the target path group is determined or the R target processing nodes cannot be updated.

Optionally, the node control apparatus further includes a deletion module (not shown in FIG. 20), configured to delete the deployed target path group after the R tasks are processed.

When the node control apparatus is implemented by using hardware, the node control apparatus may include a processor. The processor is configured to: after being coupled to a memory and reading instructions in the memory, perform, according to the instructions, the method performed by the control node described in embodiments of this application.

In the node control apparatus, there may be a plurality of processors, and the memory coupled to the processor may be independent of the processor or the node control apparatus, or may be located in the processor or the node control apparatus. The memory may be a physically independent unit, or may be storage space, a web disk, or the like on a cloud server. Optionally, there may be one or more memories. When there are a plurality of memories, the plurality of memories may be located at a same location or different locations, and may be used independently or in combination.

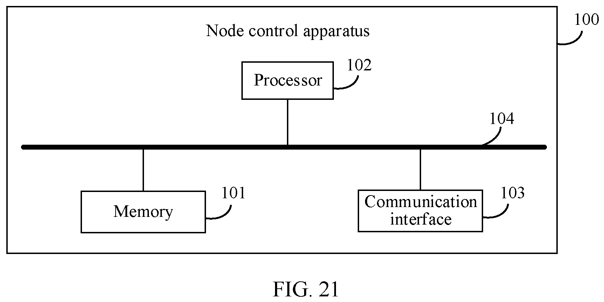

For example, when the memory is located inside the node control apparatus, refer to FIG. 21. FIG. 21 is a diagram of a structure of a node control apparatus according to an embodiment of this application. The node control apparatus 100 includes a processor 102 and a memory 101. The memory 101 is configured to store a program, and the processor 102 is configured to invoke the program stored in the memory 101, so that the node performs a corresponding method or function. Optionally, as shown in FIG. 21, the node control apparatus 100 may further include at least one communication interface 103 and at least one communication bus 104. The memory 101, the processor 102, and the communication interface 103 are communicatively connected through the communication bus 104. The communication interface 103 is configured to communicate with another device under control of the processor 102, and the processor 102 may invoke, through the communication bus 104, the program stored in the memory 101.

An embodiment of this application further provides a computer-readable storage medium. The computer-readable storage medium stores instructions. When the instructions are run on a computer, the computer is enabled to perform any method performed by a control node provided in embodiments of this application.

An embodiment of this application further provides a computer program product including instructions. When the computer program product runs on a computer, the computer is enabled to perform any method performed by a control node provided in embodiments of this application.

All or some of the foregoing embodiments may be implemented by using software, hardware, firmware, or any combination thereof. When the embodiments are implemented by using the software, all or some of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium, a semiconductor medium (for example, a solid-state drive), or the like.

It should be noted that information and data in this application are all authorized by a user or fully authorized by all parties, and collection, use, and processing of information, a policy, and a packet need to comply with related laws, regulations, and standards of related countries and regions.

In this application, the terms "first", "second", and the like are merely intended for description, but cannot be understood as an indication or implication of relative importance. The term "at least one" means one or more, and the term "a plurality of" means two or more, unless expressly limited otherwise. The term "and/or" describes only an association relationship for describing associated objects and represents that three relationships may exist. For example, A and/or B may represent the following three cases: Only A exists, both A and B exist, and only B exists.

Different types of embodiments such as the method embodiment and the apparatus embodiment provided in embodiments of this application may be cross-referenced. This is not limited in embodiments of this application.

In corresponding embodiments provided in this application, it should be understood that the disclosed system, apparatus, and the like may be implemented in other composition manners. For example, the described apparatus embodiment is merely an example. For example, division into the modules is merely logical function division and may be other division during actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The modules described as separate parts may or may not be physically separate, and the parts described as modules may or may not be physical modules, may be located in one position, or may be distributed on a plurality of apparatuses. Some or all of the units may be selected based on actual requirements to achieve the objectives of the solutions of the embodiments.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A node control method, wherein the method is performed by a control node in a processing system; and the processing system further comprises at least two processing nodes, at least two first electrical switching nodes, at least one optical switching node, and at least one second electrical switching node, wherein there is a physical link between the at least one optical switching node and the at least two first electrical switching nodes and between the at least one optical switching node and the at least one second electrical switching node, there is a physical link between the first electrical switching node and at least one processing node, and different first electrical switching nodes are connected to different processing nodes; and

the method comprises:

determining R target processing nodes that are configured to process R tasks in one-to-one correspondence, wherein $R \geq 2$;
deploying a target path group when the R target processing nodes comprise at least one first node group, wherein the first node group comprises: two target processing nodes that need to communicate with each other when executing corresponding tasks and that are connected to different first electrical switching nodes, the target path group comprises a communication path between target processing nodes in the first node group, and the communication path passes through the first electrical switching node, the optical switching node, and the second electrical switching node; and
controlling the R target processing nodes to process the R tasks in one-to-one correspondence.

2. The method according to claim 1, wherein there is a physical link between each optical switching node and each first electrical switching node and between each optical switching node and each second electrical switching node.

3. The method according to claim 2, wherein the at least two first electrical switching nodes comprise Q first electrical switching nodes, the at least one optical switching node comprises P optical switching nodes, and the at least one second electrical switching node comprises P second electrical switching nodes;

the first electrical switching node has P downlink ports and P uplink ports, the optical switching node has Q downlink ports and Q uplink ports, and the second electrical switching node has Q downlink ports; and
there is a physical link between different uplink ports of the first electrical switching node and different optical switching nodes, different downlink ports of the first electrical switching node are connected to different processing nodes, the Q uplink ports of the optical switching node are divided into P groups of uplink ports, and there is a physical link between different groups of uplink ports in the P groups of uplink ports and different second electrical switching nodes.

4. The method according to claim 3, wherein the method satisfies at least one of the following conditions:

there is a physical link between a $y^{th}$ uplink port of an $x^{th}$ first electrical switching node and an $x^{th}$ downlink port of a $y^{th}$ optical switching node, wherein $1 \leq x \leq Q$, and $1 \leq y \leq P$; and

the Q downlink ports of the second electrical switching node are divided into P groups of downlink ports, and there is a physical link between a $w^{th}$ group of uplink ports of a $z^{th}$ optical switching node and a $z^{th}$ group of downlink ports of a $w^{th}$ second electrical switching node, wherein $1 \leq z \leq P$, and $1 \leq w \leq P$.

5. The method according to claim 3 or 4, wherein P = Q.

6. The method according to any one of claims 1 to 5, wherein before the controlling the R target processing nodes to process the R tasks in one-to-one correspondence, the target processing nodes are idle processing nodes.

7. The method according to claim 6, wherein the determining R target processing nodes that are configured to process R tasks in one-to-one correspondence comprises:

when at least one first electrical switching node that satisfies a target condition exists, determining the R target processing nodes in processing nodes connected to one first electrical switching node in the at least one first electrical switching node, wherein the target condition comprises: the first electrical switching node is connected to at least R idle processing nodes; or
when none of the at least two first electrical switching nodes satisfies the target condition, determining the R target processing nodes in processing nodes connected to a plurality of first electrical switching nodes.

8. The method according to claim 7, wherein when a quantity of first electrical switching nodes in the at least one first electrical switching node is greater than 1, the one first electrical switching node is a first electrical switching node connected to a smallest quantity of idle processing nodes in the at least one first processing node.

9. The method according to claim 7 or 8, wherein the determining the R target processing nodes in processing nodes connected to a plurality of first electrical switching nodes comprises:

determining q second node groups in the processing nodes connected to the plurality of first electrical switching nodes, wherein $q \geq 2$, wherein
the second node group comprises p target processing nodes connected to a same first electrical switching node, wherein $p \geq 1$, and the R target processing nodes comprise the q second node groups.

10. The method according to claim 9, wherein quantities of second node groups connected to different first electrical switching nodes in the plurality of first electrical switching nodes are the same.

11. The method according to claim 9 or 10, wherein the determining q second node groups in the processing nodes connected to the plurality of first electrical switching nodes comprises:

sequentially determining the second node group in processing nodes connected to the at least two first electrical switching nodes, until the q second node groups are determined, wherein an initial value of p is a largest value in quantities of processing nodes connected to the first electrical switching nodes, or an initial value of p is a smaller value in the largest value and R; and
when the q second node groups cannot be determined, decreasing p, and repeatedly performing the operation of sequentially determining the second node group in processing nodes connected to the at least two first electrical switching nodes, until the q second node groups are determined or p is decreased to 0.

12. The method according to claim 11, wherein before the decreasing p, p is 2 to a $k^{th}$ power; and the decreasing p comprises: decreasing p to 2 to a $(k-1)^{th}$ power.

13. The method according to claim 11 or 12, wherein the sequentially determining the second node group in processing nodes connected to the at least two first electrical switching nodes comprises:
sequentially determining, in ascending order of quantities of idle processing nodes connected to the first electrical switching nodes, the second node group in the processing nodes connected to the at least two first electrical switching nodes.

14. The method according to any one of claims 1 to 13, wherein the target path group comprises a communication path between every two target processing nodes connected to different first electrical switching nodes in the R target processing nodes.

15. The method according to claim 14, wherein the R target processing nodes are divided into q second node groups, and the second node group comprises p target processing nodes connected to a same first electrical switching node, wherein $q \geq 2$, and $p \geq 1$;

ports connected to the optical switching node in the at least one second electrical switching node comprise p port groups, and the port group comprises q idle ports that belong to a same second electrical switching node; and

the target path group is used to connect the q idle ports to the q second node groups, and connect the p target processing nodes to the p port groups.

16. The method according to any one of claims 1 to 15, wherein when the target path group comprises a plurality of communication paths, different communication paths are independent of each other.

17. The method according to any one of claims 1 to 16, wherein before the deploying a target path group, another path for communication between non-idle processing nodes is deployed in the processing system, the another path passes through the first electrical switching node, the optical switching node, and the second electrical switching node, and the communication path in the target path group is independent of the another path.

18. The method according to any one of claims 1 to 17, wherein before the deploying a target path group, the method further comprises:

    determining a plurality of candidate path groups of the target path group; and
    determining that a candidate path group corresponding to a smallest target parameter is the target path group, wherein
    a target parameter corresponding to the candidate path group is negatively correlated to a concentration degree of idle ports connected to the optical switching node in the at least one second electrical switching node after the candidate path group is deployed.

19. The method according to claim 18, wherein the R target processing nodes comprise q second node groups, and the second node group comprises p target processing nodes connected to a same first electrical switching node, wherein $q \geq 2$, and $p \geq 1$; and

    for one candidate path group,
    ports connected to the optical switching node in the at least one second electrical switching node comprise p port groups, the port group comprises q idle ports that belong to a same second electrical switching node, and the candidate path group is used to connect the q idle ports to the q second node groups, and connect the p target processing nodes to the p port groups; and
    the target parameter corresponding to the candidate path group is $\sum_{j=1}^{P} s_j * SP_j$ , wherein P is a quantity of second electrical switching nodes, $s_j$ represents a quantity of port groups in a $j^{th}$ second electrical switching node, and $SP_j$ represents a quantity of idle ports connected to the optical switching node in the $j^{th}$ second electrical switch before the candidate path group is deployed.

20. The method according to any one of claims 1 to 19, wherein before the deploying a target path group, the method further comprises:
    when the to-be-deployed target path group cannot be determined, updating the R target processing nodes, and repeatedly performing the operation of determining a target path group until the target path group is determined or the R target processing nodes cannot be updated.

21. The method according to any one of claims 1 to 20, wherein the method further comprises:
    deleting the deployed target path group after the R tasks are processed.

22. A node control apparatus, wherein the node control apparatus belongs to a control node in a processing system; and the processing system further comprises at least two processing nodes, at least two first electrical switching nodes, at least one optical switching node, and at least one second electrical switching node, wherein there is a physical link between the at least one optical switching node and the at least two first electrical switching nodes and between the at least one optical switching node and the at least one second electrical switching node, there is a physical link between the first electrical switching node and at least one processing node, and different first electrical switching nodes are connected to different processing nodes; and
    the node control apparatus comprises:

    a first determining module, configured to determine R target processing nodes that are configured to process R tasks in one-to-one correspondence, wherein $R \geq 2$;
    a deployment module, configured to deploy a target path group when the R target processing nodes comprise at least one first node group, wherein the first node group comprises: two target processing nodes that need to communicate with each other when executing corresponding tasks and that are connected to different first electrical switching nodes, the target path group comprises a communication path between target processing nodes in the first node group, and the communication path passes through the first electrical switching node, the optical switching node, and the second electrical switching node; and

a control module, configured to control the R target processing nodes to process the R tasks in one-to-one correspondence.

23. A node control apparatus, comprising a processor and a memory, wherein the memory stores a program, and the processor is configured to execute the program stored in the memory, to implement the node control method according to any one of claims 1 to 21.

24. A processing system, comprising: a control node, at least two processing nodes, at least two first electrical switching nodes, at least one optical switching node, and at least one second electrical switching node, wherein

there is a physical link between the at least one optical switching node and the at least two first electrical switching nodes and between the at least one optical switching node and the at least one second electrical switching node, there is a physical link between the first electrical switching node and at least one processing node, and different first electrical switching nodes are connected to different processing nodes; and
the control node is configured to perform the method according to any one of claims 1 to 21.

25. A computer-readable storage medium, wherein the computer-readable storage medium stores instructions, and when the instructions are run on a computer, the computer is enabled to perform the method according to any one of claims 1 to 21.

FIG. 1

Input
layer node  Physical
link  Intermediate
layer node  Output
layer node

FIG. 2

Spine layer node:

...

Leaf layer node:

...

Transceiver node:

... ... ... ... ... ...

FIG. 3

| Processing node | → Data → | Electrical switching node | → Data + ECN mark → | Processing node |

CNP

FIG. 4

FIG. 5

FIG. 6

FIG. 7

P second electrical switching nodes:

P optical switching nodes:

Physical link ———————→

Q first electrical switching nodes:

Q * P processing nodes:

P            P            P

FIG. 8

Second electrical switching node:

Optical switching node:

Super node:

First electrical switching node        Processing node

FIG. 9

Second electrical switching node:

Optical switching node:

First electrical switching node:

Processing node:

FIG. 10

Optical
switching node:

Electrical
switching node:

Processing
node:

FIG. 11

FIG. 12

S101: A control node determines R to-be-processed tasks, where R ≥ 2

S102: The control node determines whether a first electrical switching node that satisfies a target condition exists, where the target condition includes: The first electrical switching node is connected to at least R idle processing nodes

No

Yes

S103: The control node determines, in processing nodes connected to one of at least one first electrical switching node that satisfies the target condition, R idle target processing nodes configured to process the R tasks in one-to-one correspondence

S104: The control node determines R target processing nodes in processing nodes connected to a plurality of first electrical switching nodes

S105: The control node deploys a target path group when the R target processing nodes include at least one first node group, where the first node group includes: two target processing nodes that need to communicate with each other when executing corresponding tasks and that are connected to different first electrical switching nodes, the target path group includes a communication path between the target processing nodes in the first node group, and the communication path passes through the first electrical switching node, an optical switching node, and a second electrical switching node

S106: The control node controls the R target processing nodes to process the R tasks in one-to-one correspondence

FIG. 13

32 second electrical
switching nodes:

64 first electrical
switching nodes:

Processing node:

Second node
group

Second node
group

Second node
group

FIG. 14

32 second electrical
switching nodes:

64 first electrical
switching nodes:

Processing node:

Second node
group

Second node
group

FIG. 15

FIG. 16

Second electrical
switching node:

First electrical
switching node:

Processing node:

Second
node group

Second
node group

Second
node group

Second
node group

FIG. 17

Second electrical
switching node:

First electrical
switching node:

Processing node:

Second
node group

Second
node group

Second
node group

Second
node group

FIG. 18

This application

Related
technology

This application Related
technology

Related
technology

Quantity of waiting tasks
caused by network congestion
or resource fragmentation

Usage of
processing nodes

FIG. 19

Node control apparatus

First determining module 1301

Deployment module 1302

Control module 1303

FIG. 20

Node control apparatus

Processor 102

104

Memory 101

Communication interface 103

100

FIG. 21

## INTERNATIONAL SEARCH REPORT

| | International application No. |
| --- | --- |
| | **PCT/CN2023/104797** |

### A. CLASSIFICATION OF SUBJECT MATTER

H04L49/25(2022.01)i

According to International Patent Classification (IPC) or to both national classification and IPC

### B. FIELDS SEARCHED

Minimum documentation searched (classification system followed by classification symbols)

IPC:H04L H04W G06F

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 分布式, 计算, 任务, 云, 路径, 路由, 光交换, 电交换, TOR, OXC, distribute, computing, task, cloud, path, routing, optical, switch, SW

### C. DOCUMENTS CONSIDERED TO BE RELEVANT

| Category* | Citation of document, with indication, where appropriate, of the relevant passages | Relevant to claim No. |
| --- | --- | --- |
| A | US 2020403904 A1 (HUAWEI TECHNOLOGIES CO., LTD.) 24 December 2020 (2020-12-24) <br> description, paragraphs 55-174 | 1-25 |
| A | CN 107493194 A (10TH RESEARCH INSTITUTE OF CHINA ELECTRONICS TECHNOLOGY GROUP CORP.) 19 December 2017 (2017-12-19) <br> entire document | 1-25 |
| A | CN 110932981 A (BEIJING BAOLANDE SOFTWARE CO., LTD.) 27 March 2020 (2020-03-27) <br> entire document | 1-25 |
| A | US 2020348972 A1 (BULL SAS) 05 November 2020 (2020-11-05) <br> entire document | 1-25 |
| A | WO 2019068017 A1 (FUNGIBLE, INC.) 04 April 2019 (2019-04-04) <br> entire document | 1-25 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **18 September 2023** | **22 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104797**

| Patent document cited in search report | | | Publication date (day/month/year) | Patent family member(s) | | | Publication date (day/month/year) |
|---|---|---|---|---|---|---|---|
| US | 2020403904 | A1 | 24 December 2020 | WO | 2019169986 | A1 | 12 September 2019 |
| | | | | US | 11522789 | B2 | 06 December 2022 |
| | | | | EP | 3754915 | A1 | 23 December 2020 |
| | | | | EP | 3754915 | A4 | 06 April 2022 |
| | | | | EP | 4092992 | A1 | 23 November 2022 |
| | | | | US | 2023047068 | A1 | 16 February 2023 |
| | | | | CN | 110233798 | A | 13 September 2019 |
| | | | | CN | 113098773 | A | 09 July 2021 |
| CN | 107493194 | A | 19 December 2017 | None | | | |
| CN | 110932981 | A | 27 March 2020 | None | | | |
| US | 2020348972 | A1 | 05 November 2020 | US | 11327796 | B2 | 10 May 2022 |
| | | | | EP | 3671454 | A1 | 24 June 2020 |
| | | | | FR | 3091771 | A1 | 17 July 2020 |
| | | | | US | 2020348972 | A1 | 05 November 2020 |
| WO | 2019068017 | A1 | 04 April 2019 | US | 2021218665 | A1 | 15 July 2021 |
| | | | | US | 11601359 | B2 | 07 March 2023 |
| | | | | US | 2019104057 | A1 | 04 April 2019 |
| | | | | US | 10965586 | B2 | 30 March 2021 |
| | | | | US | 2023208748 | A1 | 29 June 2023 |
| | | | | CN | 111164938 | A | 15 May 2020 |

Form PCT/ISA/210 (patent family annex) (July 2022)

**EP 4 580 160 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211199807